(19) Europäisches Patentamt
European Patent Office
Office européen des brevets

(11) **EP 1 173 491 B1**

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(21) Anmeldenummer: **00936641.0**

(22) Anmeldetag: **20.04.2000**

(51) Int Cl.[7]: **C08F 283/01**, C08F 283/02, C08F 283/00, C08F 265/04, C09D 151/00, C09D 17/00

(86) Internationale Anmeldenummer:
**PCT/DE00/01263**

(87) Internationale Veröffentlichungsnummer:
**WO 00/063266 (26.10.2000 Gazette 2000/43)**

(54) **POLYMER**

POLYMER

POLYMERE

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **21.04.1999 DE 19918132**
**21.04.1999 DE 19918135**
**21.04.1999 DE 19918134**

(43) Veröffentlichungstag der Anmeldung:
**23.01.2002 Patentblatt 2002/04**

(73) Patentinhaber: **PPG Industries Lacke GmbH**
**42329 Wuppertal (DE)**

(72) Erfinder:
• **MÜLLER, Horst**
**D-51069 Köln (DE)**
• **HILLE, Hans-Dieter**
**D-51467 Bergisch Gladbach (DE)**

(74) Vertreter: **Brandenburg, Thomas, Dr.**
**Brandenburg, Dunkelberg & Franke**
**Lindenstrasse 1**
**53773 Hennef (DE)**

(56) Entgegenhaltungen:
EP-A- 0 896 991       WO-A-96/24619
DE-A- 19 837 062      US-A- 4 997 865
US-A- 5 854 358

**Beschreibung**

Die vorliegende Erfindung betrifft Polymere sowie deren Verwendung, insbesondere auf dem Gebiet der Automobilserienlackierung.

Eine konventionelle Autolackschicht nach dem sogenannten "Basislack/Klarlackverfahren" mit ausreichender Steinschlagfestigkeit und gutem UV-Schutz besteht im allgemeinen aus insgesamt vier voneinander unterschiedlichen Schichten (Vierschichtaufbau). Diese vier Schichten werden nacheinander in getrennten Lackieranlagen aufgetragen. Die erste, direkt auf dem Autoblech befindliche Schicht ist eine elektrophoretisch aufgetragene Schicht (Electrocoatschicht, KTL-Schicht), die durch Elektrotauchlackierung - hauptsächlich kathodische Tauchlackierung (KTL) - zwecks Korrosionsschutz aufgebracht und anschließend eingebrannt wird.

Die zweite, auf der Electrocoatschicht befindliche und etwa 30 bis 40 μm dicke Schicht ist eine sogenannte Füllerschicht, die einerseits Schutz gegen mechanische Angriffe (Steinschlagschutzfunktion) bietet, andererseits die rauhe Oberfläche der Rohkarosserie für die nachfolgende Decklackierung glättet, kleinere Unebenheiten ausfüllt und die elektrophoretisch abgeschiedene Schicht (KTL-Schicht) vor der natürlichen UV-Strahlung schützt. Diese Schicht wird größtenteils durch Applikation eines Einbrennlackes, mit elektrostatischen Hochrotationsglocken und anschließendem Einbrennvorgang bei Temperaturen über 130 °C erzeugt.

Die dritte, auf der Füllerschicht befindliche Schicht ist die Basislackschicht, die durch entsprechende Pigmente der Karosserie die gewünschte Farbe gibt. Der Basislack wird im herkömmlichen Spritzverfahren aufgetragen. Die Schichtdicke dieser herkömmlichen Basislackschicht liegt je nach Farbton zwischen etwa 12 bis 25 μm. Meistens wird diese Schicht, besonders bei Metallic-Effektlacken, in zwei Verfahrensschritten aufgebracht. In einem ersten Schritt erfolgt die Auftragung mittels elektrostatischer Hochrotationsglocken, gefolgt von einem zweiten Auftrag mittels pneumatischer Zerstäubung. Diese Schicht wird (bei Verwendung von wäßrigem Basislack) mit Infrarotstrahlern und/oder durch Warmluftkonvektion zwischengetrocknet.

Die vierte und oberste, auf der Basislackschicht befindliche Schicht ist die Klarlackschicht, die meistens in einem Auftrag durch elektrostatische Hochrotationsglocken aufgetragen wird. Sie verleiht der Karosserie den gewünschten Glanz und schützt den Basislack vor Umwelteinflüssen (UV-Strahlung, Salzwasser, etc.).

Anschließend werden die Basislackschicht und die Klarlackschicht gemeinsam eingebrannt.

Im Hinblick auf den Umweltschutz werden immer mehr Automobilserienlacke auf Wasserbasis verwendet. Wäßrige Automobilserienlacke sind bestens eingeführt und aus der industriellen Anwendung nicht mehr wegzudenken, nicht nur aus Gründen des Umweltschutzes. Wäßrige Lacksysteme sind inzwischen nicht mehr nur das notwendige Übel, sondern stellen technologisch und vom Potential der Möglichkeiten eine ernst zu nehmende Alternative dar. Gleichwohl sind die Anforderungen in den letzten Jahren erheblich angestiegen. Die Notwendigkeit zur Steigerung der Produktivität bei gleichzeitiger weiterer Erniedrigung der Emissionswerte stellt neue Anforderungen an wäßrige Basislacksysteme. Insbesondere zu nennen ist die Verträglichkeit mit emissionsarmen Klarlacken (Pulver, Wasserklarlack, Pulverslurry) und die wegen kürzerer Verarbeitungszyklen notwendige Steigerung der Applikationssicherheit. So ist es z.B. sehr schwierig, mit einem Wasserbasislack des Standes der Technik, zusammen mit einem Pulverklarlack, die geforderten Haftungseigenschaften zu erreichen.

Insbesondere die Verträglichkeit mit Klarlacken auf Basis von Pulverslurry stellen besonders hohe Anforderungen an wäßrige Basislacke. Unter dem Begriff Pulverslurry wird eine Suspension aus Lackteilchen und Wasser verstanden, die üblicherweise aus 60 bis 70 Gew.-% Wasser und 30 bis 40 Gew.-% Festkörper besteht. Solche Zusammensetzungen sind beispielsweise aus der DE 196 13 547 C2 und DE 196 18 657 A1 bekannt. Die Verwendung einer solchen Pulverslurry zeichnet sich durch eine besonders einfache Applikation der entsprechenden Lacke aus. So kann ein solcher Lack mit einer herkömmlichen Lackieranlage für Naßlacke aufgetragen werden; d.h. daß auf den Einsatz von speziell abgetrennten Lackiervorrichtungen, wie sie für die Lackierung mit Pulverlacken notwendig sind, verzichtet werden kann. Ein unerwünschter Effekt, der bei der Verwendung herkömmlicher Basislacke auf Wasserbasis unter einer Klarlackschicht aus Pulverslurry beobachtet wird, ist das sogenannte "mud-cracking". Mit dieser Bezeichnung wird ein Oberflächenzustand der ausgehärteten Lackoberfläche beschrieben, der auf ein Reißen der Lackschichten zurückzuführen ist und mit dem Aussehen eines ausgetrockneten Wüstenbodens vergleichbar ist.

Des weiteren ist bei einem wäßrigen Metallicbasislack die sogenannte "Gasungsstabilität" besonders wichtig. Der Ausdruck "Gasungsstabilität" bezeichnet die Eigenschaft eines ungeschützte Aluminiumteilchen enthaltenden Metallic-Effektlackes, bei dem die Aluminiumteilchen nicht mit dem Lösemittel Wasser unter Bildung von Wasserstoff reagieren.

Eine Möglichkeit der Beeinflussung dieser Eigenschaft ist die Verwendung von speziellen, besonders behandelten Aluminiumbronzen (EP-0 321 470). Solche Aluminiumbronzen sind teurer, weniger brillant und können unerwünschte Eigenschaften in das System einbringen, wie z.B. eine erhöhte Neigung zur Agglomeratbildung.

Eine andere Möglichkeit die Gasung zu verhindern ist der Zusatz entsprechender Additive (EP-0 206 615 B1 und EP-0 238 222 B1). In vielen Fällen handelt es sich um Additive, die neben ihren erwünschten Wirkungen auch negative Eigenschaften in das System einbringen können.

Aufgrund des gesteigerten Anforderungsprofils an einen in der Automobilindustrie verwendbaren wäßrigen Basislack kommt den rheologischen Eigenschaften eines solchen eine erhöhte Bedeutung zu.

Unter dem Begriff "rheologische Eigenschaften" wird verstanden, daß der Lack einerseits beim Spritzvorgang, also bei hohen Schergeschwindigkeiten, eine so niedrige Viskosität hat, daß er leicht zerstäubt werden kann, und andererseits beim Auftreffen auf dem Substrat, also bei niedrigen Schergeschwindigkeiten, eine so hohe Viskosität hat, daß er genügend standfest ist und keine Läuferbildung zeigt. Auch die Ausbildung eines ausgeprägten Metallic-Effektes hängt mit diesen Eigenschaften zusammen.

Zur Verbesserung der rheologischen Eigenschaften und zur besseren Ausbildung des Metallic-Effektes werden besondere Additive beschrieben (EP-0 281 936). Hierbei handelt es sich um spezielle Schichtsilikate, die beträchtliche Mengen an Alkali- oder Erdalkaliionen enthalten. Diese Ionen führen oft wegen ihrer wasseranziehenden Wirkung zu einer schlechten Schwitzwasserbeständigkeit im Gesamtaufbau einer Automobilbeschichtung.

Daher ist es ein Bestreben der Lackhersteller, solche Additive nach Möglichkeit zu vermeiden und als Bindemittel solche Polymere zu verwenden, die die gewünschten Eigenschaften von sich aus mitbringen, sogenannte "maßgeschneiderte" Polymere.

Einer der wichtigsten Vertreter dieser Spezies sind wäßrige Dispersionen von vernetzten Polymermikroteilchen.

So beschreibt die EP-0 502 934 eine Mikrogeldispersion. Diese dient sowohl zur Verbesserung der rheologischen Eigenschaften, als auch für eine Erhöhung der Gasungsstabilität von wäßrigen Metallicbasislacken. Die Herstellung dieser Mikrogeldispersionen erfolgt durch eine einstufige Polykondensation eines Polyesterpolyols mit einem Aminoplastharz (Melaminharz) in wäßriger Phase.

Die Verwendung dieses Mikrogels in Basislacken bei der Lackierung von Automobilkarosserien hat aber den Nachteil, daß die Haftung zwischen der Basislackschicht und einer darauf befindlichen, aus einem Pulverklarlack oder einer Pulverklarlackslurry aufgebrachten Klarlackschicht nicht den von der Automobilindustrie vorgeschriebenen Anforderungen entspricht.

Ferner sind aus der DE 195 04 015 A1 Mikrogele bekannt, die durch Polymerisation einer ethylenisch monofunktionellen Verbindung (Polyacrylat) mit mindestens einer ethylenisch di- oder multifunktionellen Verbindung in Gegenwart eines Polyesters hergestellt werden. Der Polyester wirkt hierbei als Emulgator und Stabilisator.

Diese Mikrogele haben den Nachteil, daß die rheologischen Eigenschaften dieser Lakke nicht mehr den gesteigerten Anforderungen der Automobilindustrie entsprechen. Dies zeigt sich besonders deutlich hinsichtlich der Anforderungen an die Viskosität einerseits und an die Standsicherheit andererseits.

So ist es unter Verwendung dieser Mikrogele nicht möglich, einen wäßrigen Basislack bereitzustellen, der bei einer Schergeschwidigkeit von 1.000 s$^{-1}$ eine Viskosität von maximal 120 mPa·s hat und dabei so standfest ist, daß die notwendigen Schichtdicken von 20 - 30 µm (in Abhängigkeit des jeweiligen Farbtons) läuferfrei erreicht werden.

Aufgabe der vorliegenden Erfindung ist die Bereitstellung eines Polymers, das bei Verwendung in farbgebenden oder farblosen Beschichtungsmittelzubereitungen, insbesondere in Basislacken und Klarlacken für die Automobilindustrie, diesen Zubereitungen sowohl die erforderlichen rheologischen Eigenschaften, die dekorativen Eigenschaften, als auch die notwendige Haftung unter einem Lack auf Basis von Pulver oder Pulverslurry verleiht.

Diese Aufgabe wird gelöst durch ein Polymer, erhältlich durch Polymerisation in wäßriger Phase einer Monomerenmischung aus

    i) 50 bis 98 Gew.-% mindestens einer ethylenisch monofunktionellen Verbindung;
    ii) 2 bis 50 Gew.-% mindestens einer ethylenisch di- oder multifunktionellen Verbindung;

in Gegenwart eines Polymers, ausgewählt aus einem

**-** Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
**-** Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
**-** Polyacrylat mit einem zahlenmittleren Molekulargewicht von 2.000 bis 100.000, einer Säurezahl zwischen 25 und 300 und einer OH-Zahl zwischen 50 bis 250;

gefolgt von einer Umsetzung des aus der Polymerisation erhaltenen Produkts mit einem Vernetzer.

Diese Aufgabe wird ebenso gelöst durch ein Polymer, erhältlich durch Polymerisation in wäßriger Phase einer Monomerenmischung aus mindestens einer ethylenisch monofunktionellen Verbindung; in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

gefolgt von einer Umsetzung des aus der Polymerisation erhaltenen Produkts mit einem Vernetzer.

Das Mengenverhältnis zwischen der eingesetzten ethylenisch monofunktionellen Verbindung bzw. der Summe der eingesetzten ethylenisch mono- di- und/oder multifunktionellen Verbindungen und der Summe des aus einem Polyesterpolyol, Polyurethan und/oder Polyacrylat ausgewählten Polymers und Vernetzers kann zwischen 85 : 15 und 50 : 50 betragen.

Diese Polymere haben gegenüber den Mikrogelen des Standes der Technik den Vorteil, daß sie einem Metallicbasislack eine hervorragende Gasungsstabilität sowie ausgezeichnete rheologische Eigenschaften verleihen, wobei es mit diesem Metallicbasislack erstmals möglich ist, in herkömmlichen Mehrschichtlackierungen von Automobilen unter einer Klarlackschicht aus einem Pulverklarlack oder einem Pulverslurryklarlack eine ausreichende Haftung und Schwitzwasserbeständigkeit zu erzielen, ohne daß bei Verwendung einer Pulverklarlackslurry der sogenannte "mud-cracking"-Effekt auftritt. Die rheologischen Eigenschaften der unter Verwendung dieser Polymere hergestellten Beschichtungszusammensetzungen sind gegenüber denen des Standes der Technik deutlich verbessert. So kann mit einem Lack, der das erfindungsgemäße Polymer beispielsweise in einer Menge von 20 Gew.-% (bezogen auf den Festkörperanteil) enthält, eine Viskosität von höchstens 100 mPa·s bei einer Schergeschwidigkeit von 1.000 $^{-1}$ erhalten werden, wobei die Trockenfilmdicke der ausgehärteten Basislackschicht mindestens 20 μm beträgt, ohne daß Läufer zu beobachten sind.

Den auf beiden verschiedenen Herstellungsweisen erhältlichen Polymeren ist gemeinsam, daß sie aus einem zweistufigen Herstellungsprozeß stammen. Der erste Herstellungsschritt umfaßt eine Polymerisation von mindestens einem Monomer in Gegenwart eines Polymers. Dieses Polymer liegt aufgrund seiner speziellen Eigenschaften, insbesondere aufgrund seiner ausreichend hohen Säurezahl, in der Polymerisationslösung in dispergierter Teilchenform vor. Das während dieses Polymerisationsschritts zugegebene Monomer wandert in das Innere der Polymerteilchen und wird dann mit geeigneten, dem Fachmann bekannten Verfahren, polymerisiert. Hierdurch entsteht ein Polymer, das einen Kern aus dem polymerisierten Monomer aufweist, der von dem während der Polymerisation anwesenden Polymer (ausgewählt aus dem Polyesterpolyol, Polyurethan und/oder Polyacrylat) umgeben ist. Dieser Aufbau entspricht im wesentlichen einer Core/Shell-Struktur.

Der Kern ist dabei je nach gewählten Verfahrensbedingungen vernetzt oder unvernetzt: Wird mindestens ein ethylenisch monofunktionelles Monomer polymerisiert, weist das entstandene Polymer einen unvernetzten Kern auf. Wird aber mindestens ein ethylenisch monofunktionelles Monomer mit mindestens einem ethylenisch di- oder multifunktionellen Monomer polymerisiert, so entsteht ein Polymer mit einem vernetzten Kern.

Wichtig bei diesem Herstellungsschritt ist, daß das aus einem Polyesterpolyol, Polyurethan und/oder Polyacrylat ausgewählte Polymer in einer solch ausreichenden Menge vorliegt, daß das zugesetzte Monomer in der Reaktionsmischung ausreichend stabil dispergiert wird. Ansonsten würde die Polymerisation nur unvollständig verlaufen und schließlich zur Koagulation der gesamten Dispersion führen.

Wichtig bei dem Polymerisationsschritt ist, daß bei Verwendung einer Monomerenmischung aus mindestens einem ethylenisch monofunktionellen Monomer und mindestens einem ethylenisch di- oder multifunktionellen Monomer das daraus entstandene Polymer vollständig vernetzt ist (die vollständige Vernetzung bezieht sich aber nur auf das Polymer, das unmittelbar aus der Monomerenmischung erhältlich ist, und beispielsweise nicht auf das aus einem Polyesterpolyol, Polyurethan und/oder Polyacrylat ausgewählten Polymer).

Den Grad der Vernetzung der Polymerteilchen erkennt man am Gehalt der unlöslichen Anteile. Die unlöslichen Anteile werden mittels der sogenannten "THF-Methode" bestimmt. Hierzu werden in ein Zentrifugenröhrchen ca. 1 g der Mikrogeldispersion eingewogen, mit 10 ml Tetrahydrofuran versetzt und ca. 1 Minute lang in einem Ultraschallbad homogenisiert. Dann wird mittels einer Zentrifuge mit Festwinkel-Rotor 15 Minuten lang bei 13.500 U/min zentrifugiert. Anschließend wird der Überstand vorsichtig abdekantiert und das Röhrchen in einem Laborofen 6 h lang bei 105 °C getrocknet. Nach Abkühlen des Röhrchens wird der Rückstand zurückgewogen. Die unlöslichen Anteile werden gemäß folgender Formel berechnet:

% Unlösliche Anteile = Rückstand * 10000 / Einwaage * % Festkörpergehalt

der Mikrogeldispersion

Unter dem Begriff "vollständig vernetzt" werden solche Polymere verstanden, die einen unvernetzten Anteil — bezogen auf das aus den eingesetzten Monomeren stammende Polymer — von nicht mehr als 5 Gew.-% aufweisen. Im zweiten Herstellungsschritt wird das zuvor hergestellte Polymerteilchen mit einem Vernetzer umgesetzt. Erst in diesem Schritt wird das aus einem Polyesterpolyol, Polyurethan und/oder Polyacrylat ausgewählte Polymer vernetzt, wobei die funktionellen Gruppen des Vernetzers mit den OH-Gruppen diese Polymers reagieren. Die Menge an Vernetzer ist bei diesem Verfahrensschritt so zu wählen, daß diese letzte Polymerschicht entsprechend den zuvor genannten Kriterien vollständig vernetzt ist. Im allgemeinen liegt das Mengenverhältnis von aus einem Polyesterpolyol, Polyurethan und/oder Polyacrylat ausgewählten Polymer zu Vernetzer zwischen 90:10 und 40:60.

Als Endprodukt erhält man ein Polymerteilchen, dessen Äußeres vollständig vernetzt ist. Aufgrund dieser Eigenschaft kann es an einer Lackfilmbildung nicht teilnehmen, und ist gegenüber anderen reaktionsfähigen Polymeren oder auch Vernetzern weitgehend inert.

Besonders gute Ergebnisse können erhalten werden, wenn das während der Polymerisation anwesende Polyesterpolyol, Polyurethan und/oder Polyacrylat im statistischen Mittel mindestens eine freie Carboxylgruppe pro Molekül aufweist, die aus Trimellithsäure oder Trimellithsäureanhydrid stammt. Dies ermöglicht eine besonders hohe Reaktionsgeschwindigkeit während der Vernetzung.

Eine mögliche Erklärung für diese Tatsache könnte die vergleichsweise starke Acidität der Carboxylgruppe der Trimellithsäure sein.

Besonders geeignete Beispiele für die ethylenisch monofunktionelle Verbindung sind Alkylester oder Hydroxyalkylester der Acryl- oder Methacrylsäure. Ebenso eignen sich Vinylacetat, Vinyltoluol, Styrol, Acrylamid.

Als Alkyl(meth)acrylat oder Hydroxyalkyl(meth)acrylat sind solche mit 1 bis 18 Kohlenstoffatomen im Alkylrest bevorzugt, wobei der Alkylrest substituiert oder unsubstituiert sein kann.

Als Alkyl(meth)acrylat sind insbesondere Laurylacrylat, Isobomyl(meth)acrylat, Cyclohexyl(meth)acrylat, tert.-Butylcyclohexyl(meth)acrylat, Benzyl(meth)acrylat, Glycidyl-(meth)acrylat und Trimethylcylohexyl(meth)acrylat zu nennen. Besonders bevorzugt sind $\alpha$-Ethylhexyl(meth)acrylat, Methyl(meth)acrylat, n-Butyl-(meth)acrylat und tert.-Butyl(meth)acrylat. Als Hydroxyalkyl(meth)acrylat sind bevorzugterweise 2-Hydroxyethyl(meth)acrylat, 2-Hydroxypropyl(meth)acrylat, 2-Hydroxybutyl(meth)acrylat, Hexandiol-1,6-mono-(meth)acrylat und 4-Hydroxybutyl(meth)acrylat zu nennen.

Als ethylenisch di- oder multifunktionelle Verbindung werden vorzugsweise Diacrylate, Triacrylate und/oder (Meth)acrylsäureester polyfunktioneller Alkohole eingesetzt.

Insbesondere werden Allyl(meth)acrylat, Hexandioldi(meth)acrylat, Ethylenglykoldi-(meth)acrylat, Neopentylglykoldi(meth)acrylat, Butandioldi(meth)acrylat oder Trimethylolpropantri(meth)acrylat verwendet.

Die zuvor genannten ethylenisch mono- bzw. di- oder multifunktionellen Verbindungen können alleine oder in Abmischung eingesetzt werden.

In Abmischung mit den ethylenisch monofunktionellen Verbindungen oder den ethylenisch di- oder multifunktionellen Verbindungen eignet sich insbesondere ein Polyester oder ein Polyurethan mit einer Säurezahl von weniger als 5, insbesondere weniger als 3, der im statistischen Mittel bis zu eine polymerisierbare Doppelbindung pro Molekül enthält.

In Abmischung mit ethylenisch di- oder multifunktionellen Verbindungen eignet sich ebenfalls ein Polyester oder ein Polyurethan mit einer Säurezahl von weniger als 5, insbesondere weniger als 3, der im statistischen Mittel mindestens 1,5 polymerisierbare Doppelbindungen pro Molekül enthält.

Das Molekulargewicht des Polyesters oder des Polyurethans kann durch das Mengenverhältnis und die Funktionalität der eingesetzten Ausgangsverbindungen gesteuert werden.

Die Menge an polymerisierbaren Doppelbindungen im Polyester kann durch die Menge der in den Polyester eingebauten Polyole und/oder Polycarbonsäuren, die eine polymerisierbare Doppelbindung enthalten, gesteuert werden.

Je nach Viskosität des hergestellten Polyesters kann dieser zur besseren Handhabung in niedrigmolekularen ethylenisch monofunktionellen Verbindungen angelöst werden, die ebenfalls zur Polymerisation verwendet werden. Zur Herstellung des Polyesters eignen sich Polyole ohne polymerisierbare Doppelbindung wie Ethylenglykol, Diethylenglykol, Triethylenglykol, Tetraethylenglykol, Hexaethylenglykol, 1,2-Propylenglykol, 1,3-Propylenglykol, 1,4-Butandiol, 1,5-Pentandiol, 1,6-Hexandiol, 2,2-Dimethylpropandiol, 2,2,4-Trimethylpentandiol, 1,3-Dimethylolcyclohexan, 1,4-Dimethylolcyclohexan, Hydroxypivalinsäureneopentylglykolmonoester, Dimethylolpropionsäure und perhydriertem Bisphenol A; Trimethylolpropan und Glycerin; sowie Pentaerythrit, Dipentaerythrit und Di-(Trimethylolpropan).

Als Polycarbonsäuren ohne polymerisierbare Doppelbindung eignen sich Bernsteinsäure, Glutarsäure, Adipinsäure, Azelainsäure, Terephthalsäure, Phthalsäure, Isophthalsäure, Endomethylentetrahydrophthalsäure, 1,2-Cyclohexandicarbonsäure, 1,3-Cyclohexandicarbonsäure, 1,4-Cyclohexandicarbonsäure, Dodecandisäure, Dodecandicarbonsäure; dimere und polymere Fettsäuren und Trimellithsäure; sowie die möglichen Anhydride der zuvor genannten Säuren.

Als Polyole mit polymerisierbarer Doppelbindung eignen sich solche, ausgewählt aus der Gruppe

- von 1,4-Butendiol, Dimethylolpropionsäureallylester, Dimethylolpropionsäurevinylester, Trimethylolpropanmonoallylether, Glycerinmonoallylether;

- der Anlagerungsprodukte aus Allylglycidylether oder Glycidyl(meth)acrylat an einen eine Carboxylgruppe aufweisenden Polyester; sowie
- der Anlagerungsprodukte aus Allylglycidylether oder Glycidyl(meth)acrylat an Dimethylolpropionsäure.

Als Polycarbonsäuren mit polymerisierbarer Doppelbindung eignen sich Maleinsäure, Fumarsäure, Itaconsäure, Citraconsäure und Aconitsäure sowie deren mögliche Anhydride.

Die Menge an polymerisierbaren Doppelbindungen im Polyurethan kann durch die Menge der in dem Polyurethan eingebauten Bausteine, die eine polymerisierbare Doppelbindung enthalten, gesteuert werden.

Je nach Viskosität des hergestellten Polyurethans kann zur besseren Handhabung in solchen niedrigmolekularen ethylenisch monofunktionellen Verbindungen angelöst werden, die ebenfalls zur Polymerisation verwendet werden.

Zur Herstellung des Polyurethans eignen sich Polyisocyanate aus der Gruppe von 1,3-Bis(1-isocyanato-1-methylethyl) benzol (TMXDI, m-Tetramethylxylylendiisocyanat), (4,4'-Dicyclohexylmethandiisocyanat, Desmodur W), Isophorondiisocyanat (IPDI, 3,5,5-Trimethyl-1-isocyanato-3-isocyanatomethylcyclohexan) und 2,4,6-Trioxo-1,3,5-tris(6-isocyanatohexyl)hexahydro-1,3,5-triazin (Desmodur N3300).

Als Umsetzungsprodukte mit Polyisocyanat zur Herstellung des Polyurethans eignen sich die aus der Polyurethanchemie bekannten Rohstoffe wie Polyesterpolyole, Polyetherpolyole, niedrigmolekulare Polyole und Diamine.

Zum Einbau von polymerisierbaren Doppelbindungen können niedrigmolekulare Polyole mit polymerisierbaren Doppelbindungen, Polyesterpolyole, die Bausteine mit polymerisierbaren Doppelbindungen enthalten und auch Hydroxyalkyl(meth)acrylate, wie 2-Hydroxyethyl(meth)acrylat, 2-Hydroxypropyl(meth)acrylat, 2-Hydroxybutyl-(meth)acrylat, Hexandiol-1,6-mono(meth)acrylat und 4-Hydroxybutyl(meth)acrylat, verwendet werden.

Das während der Polymerisation verwendete

- Polyesterpolyol kann ein zahlenmittleres Molekulargewicht zwischen 700 und 5.000, besonders bevorzugt zwischen 750 und 2.000; eine Säurezahl zwischen 35 und 150, besonders bevorzugt zwischen 40 und 120; und eine OH-Zahl zwischen 150 und 300, besonders bevorzugt zwischen 220 und 280;
- Polyurethan kann ein zahlenmittleres Molekulargewicht zwischen 700 und 5.000, besonders bevorzugt zwischen 750 und 2.500; eine Säurezahl zwischen 30 und 120, besonders bevorzugt zwischen 40 und 80; und eine OH-Zahl zwischen 150 und 300, besonders bevorzugt zwischen 220 und 280; und/oder
- Polyacrylat kann ein zahlenmittleres Molekulargewicht zwischen 2.500 und 20.000, besonders bevorzugt zwischen 4.000 und 10.000; eine Säurezahl zwischen 35 und 150, besonders bevorzugt zwischen 40 und 125; und eine OH-Zahl zwischen 100 und 250, besonders bevorzugt zwischen 150 und 200;

haben.

Dieses während der Polymerisation verwendete Polyesterpolyol kann keine polymerisierbare Doppelbindung aufweisen und erhältlich sein aus der Umsetzung mindestens einer Polycarbonsäure ohne polymerisierbare Doppelbindung mit mindestens einem Polyol ohne polymerisierbare Doppelbindung.

Ebenso ist es möglich, daß dieses Polyesterpolyol im statistischen Mittel mindestens eine polymerisierbare Doppelbindung pro Molekül aufweist und erhältlich ist aus der Umsetzung

i. mindestens einer Polycarbonsäure ohne polymerisierbare Doppelbindung mit mindestens einem Polyol mit mindestens einer polymerisierbaren Doppelbindung;
ii. mindestens einer Polycarbonsäure mit mindestens einer polymerisierbaren Doppelbindung mit mindestens einem Polyol ohne polymerisierbare Doppelbindung; oder
iii. mindestens einer Polycarbonsäure mit mindestens einer polymerisierbaren Doppelbindung mit mindestens einem Polyol mit mindestens einer polymerisierbaren Doppelbindung.

Letzteres Polyesterpolyol ist dann zu empfehlen, wenn eine Copolymerisation mit den vinylischen Monomeren bevorzugt wird.

Die Polycarbonsäure ohne polymerisierbare Doppelbindung ist vorzugsweise ausgewählt aus der Gruppe von

- Bernsteinsäure, Glutarsäure, Adipinsäure, Acelainsäure, Terephthalsäure, Phthalsäure, Isophthalsäure, Endomethylentetrahydrophthalsäure, 1,2-Cyclohexandicarbonsäure, 1,3-Cyclohexandicarbonsäure, 1,4-Cyclohexandicarbonsäure, Dodecandisäure, Dodecandicarbonsäure;
- dimeren und polymeren Fettsäuren sowie Trimellithsäure;

sowie den möglichen Anhydriden hiervon.

Das Polyol ohne polymerisierbare Doppelbindung kann insbesondere ausgewählt sein aus der Gruppe von

- Ethylenglykol, Diethylenglykol, Triethylenglykol, Tetraethylenglykol, Hexaethylenglykol, 1,2-Propylenglykol, 1,3-Propylenglykol, 1,4-Butandiol, 1,5-Pentandiol, 1,6-Hexandiol, 2,2-Dimethylpropandiol, 2,2,4-Trimethylpentandiol, 1,3-Dimethylolcyclohexan, 1,4-Dimethylolcyclohexan, Hydroxypivalinsäureneopentylglykolmonoester, Dimethylolpropionsäure und perhydriertem Bisphenol A;
- Trimethylolpropan und Glycerin; sowie
- Pentaerythrit, Dipentaerythrit und Di-(Trimethylolpropan).

Die mindestens eine polymerisierbare Doppelbindung aufweisende Polycarbonsäure kann ausgewählt werden aus der Gruppe von Maleinsäure, Fumarsäure, Itaconsäure, Citraconsäure und Aconitsäure sowie den möglichen Anhydriden hiervon.

Bei dem mindestens eine polymerisierbare Doppelbindung aufweisenden Polyol handelt es sich insbesondere um

- 1,4-Butendiol, Dimethylolpropionsäureallylester, Dimethylolpropionsäurevinylester, Trimethylolpropanmonoallylether, Glycerinmonoallylether;
- Anlagerungsprodukte aus Allylglycidylether oder Glycidyl(meth)acrylat an einen eine Carboxylgruppe aufweisenden Polyester; sowie
- Anlagerungsprodukte aus Allylglycidylether oder Glycidyl(meth)acrylat an Dimethylolpropionsäure.

Entsprechend einer weiteren, erfindungsgemäßen Ausführungsform kann das während der Polymerisation verwendete Polyesterpolyol durch mindestens eine Monocarbonsäure modifiziert sein, wobei die Monocarbonsäure ausgewählt ist aus der Gruppe der gesättigten oder ungesättigten, isolierten oder konjugierten, linearen oder verzweigten Fettsäuren sowie der Benzoesäure oder Crotonsäure.

Als Fettsäure werden verzweigte oder unverzweigte Monocarbonsäuren mit 5 bis 22 Kohlenstoffatomen bezeichnet. Zu nennen sind insbesondere Linolsäure, Ölsäure, Sojafettsäure, Isononansäure oder Isostearinsäure.

Bei dem erfindungsgemäß einzusetzenden Vernetzer handelt es sich vorzugsweise um ein Aminoplastharz oder ein Polyisocyanat.

Als Polyisocyanat sind besonders 1,3-Bis(1-isocyanato-1-methylethyl)benzol (TMXDI, m-Tetramethylxylylendüsocyanat), (4,4'-Dicyclohexylmethandiisocyanat, Desmodur W), Isophorondiisocyanat (IPDI, 3,5,5-Trimethyl-1-isocyanato-3-isocyanatomethylcyclohexan) und 2,4,6-Trioxo-1,3,5-tris(6-isocyanatohexyl)hexahydro-1,3,5-triazin (Desmodur N3300) zu nennen. Das Polyisocyanat kann hydrophil modifiziert werden, um so eine gleichmäßigere Vernetzung des Reaktionsproduktes zu erreichen.

Besonders ausgezeichnete Ergebnisse werden mit Melaminharzen erhalten.

Im Hinblick auf eine industrielle Herstellung des erfindungsgemäßen Polymers hat es sich als günstig herausgestellt, wenn der Neutralisationsgrad des Polyesterpolyols während des gesamten Herstellungsvorgangs zwischen 30 und 100 %, insbesondere zwischen 50 und 80 %, liegt. Dies ermöglicht eine besonders hohe Konstanz der gewünschten Eigenschaften der hergestellten Polymere.

Die Auswahl des optimalen Neutralisationsgrades ist dem Fachmann bekannt und kann durch wenige Laborversuche ermittelt werden.

Die Polymerisation des erfindungsgemäßen Polymers erfolgt anhand der bekannten Verfahren, die für eine radikalische Polymerisation in wäßriger Phase geeignet sind. Zu nennen ist hier das Verfahren der Emulsionspolymerisation.

Es ist auch möglich, jedoch nicht zwingend, daß die Emulsionspolymerisation unter Verwendung eines Düsenstrahldispergators oder eines Microfluidizers durchgeführt wird. Hierdurch können einheitlichere Teilchengrößenverteilungen erreicht werden.

Als Polymerisationsinitiatoren können die für die Emulsionspolymerisation üblichen Peroxodisulfate, Wasserstoffperoxid oder auch organische Peroxide verwendet werden. Es sind auch andere Initiatoren wie z.B. Azoisobuttersäuredinitril verwendbar.

Als besonders vorteilhaft hat sich die Polymerisationsinitiierung durch ein Redoxsystem erwiesen. Dieses in der Emulsionspolymerisationstechnik gut bekannte Verfahren nutzt die Tatsache aus, daß Hydroperoxide durch geeignete Reduktionsmittel schon bei sehr niedrigen Temperaturen zum radikalischen Zerfall angeregt werden.

Geeignete Reduktionsmittel sind beispielsweise Natriummetabisulfit oder dessen Formaldehydanlagerungsprodukt (Na-Hydroxymethansulfinat). Sehr gut geeignet ist auch Isoascorbinsäure. Besonders vorteilhaft ist die Kombination aus tert.-Butylhydroperoxid, (Iso)ascorbinsäure und Eisen(II)sulfat.

Die Verwendung dieser Mischung hat den Vorteil, daß die Polymerisation bei Raumtemperatur gestartet werden kann.

Das erfindungsgemäße Polymer kann insbesondere für wäßrige Beschichtungszusammensetzungen verwendet werden.

Eine bevorzugte Verwendungsform der Erfindung ist der Einsatz in wäßrigen Basislacken, insbesondere Effektbasislacken für die Lackierung von Automobilen.

Die erfindungsgemäßen Polymere verleihen diesen wäßrigen Beschichtungszusammensetzungen ein ausgezeichnetes Applikationsverhalten und hervorragende dekorative Eigenschaften, die sich beispielsweise anhand eines ausgeprägten Metalleffekts, einer sehr guten Resistenz gegen Ablaufen in der Vertikalen, Wolkenfreiheit, Resistenz gegen Wiederanlösen durch unterschiedliche Klarlacke, gute Schleifriefenabdeckung und der Erfüllung der in der Automobilindustrie üblichen Eigenschaftsvorgaben, wie Haftungs-, Steinschlag- und Schwitzwasserbeständigkeit, zeigen.

So können die erfindungsgemäßen Polymere ebenso gut für die Herstellung von wäßrigen Klarlacken, Einbrennlacken für industrielle Anwendungen sowie Anstrichfarben für den Bautensektor verwendet werden.

Um zu Polymeren in nicht-wäßriger Phase zu gelangen, muß den erfindungsgemäßen, in wäßriger Phase vorliegenden Polymeren, entsprechend einer besonderen Ausführungsform der Erfindung, das Wasser entzogen werden.

Dies kann durch jedes bekannte Verfahren, beispielsweise durch Sprühtrocknen, Gefriertrocknen oder Eindampfen, gegebenenfalls unter vermindertem Druck, geschehen.

Nach dem Wasserentzug kann das erfindungsgemäße Polymer in Pulverform oder als harzartige Masse vorliegen.

Gemäß einer besonders bevorzugten Variante der Erfindung wird das in wäßriger Phase vorliegende Polymer in eine flüssige organische Phase überführt. Dies kann durch eine azeotrope Destillation geschehen. Hierbei kann man so verfahren, daß die wäßrige Polymerdispersion bei erhöhter Temperatur, gegebenenfalls unter vermindertem Druck, kontinuierlich oder diskontinuierlich in einen Reaktor gegeben wird, der ein Schleppmittel, d.h. ein Lösemittel oder ein Gemisch mehrerer Lösemittel, von denen mindestens eines ein Azeotrop mit Wasser bildet, enthält.

Der Reaktor ist mit einer geeigneten Kondensierungsvorrichtung und einem Wasserabscheider mit Rücklauf zum Reaktor ausgestattet. Nach Erreichen der Siedetemperatur des Azeotropes steigt die gasförmige azeotrope Phase (d.h. Schleppmittel und Wasser) in die Kondensierungsvorrichtung auf. Dort kondensiert das Azeotrop und läuft von dort in den Wasserabscheider. Im Wasserabscheider erfolgt eine Phasentrennung zwischen dem Schleppmittel und dem Wasser. Bei einer kontinuierlich durchgeführten azeotropen Destillation fließt das Schleppmittel wieder zurück in den Reaktor, so daß nur geringe Mengen an Schleppmittel eingesetzt werden müssen. Das aus dem Wasserabscheider erhaltene Wasser ist frei von organischen Bestandteilen und kann erneut zur Herstellung der erfindungsgemäßen wäßrigen Polymerdispersion eingesetzt werden.

Das Schleppmittel kann aus der Gruppe von Xylol, Butylacetat, Methylisobutylketon, Methylamylketon, Pentanol, Hexanol oder Ethylhexanol ausgewählt sein.

Ein wesentlicher Vorteil hierbei ist, daß das Schleppmittel nach erfolgter Überführung in die organische Phase dort verbleibt und für die Verwendung lösemittelhaltiger Beschichtungszusammensetzungen von Vorteil ist. Hinsichtlich der weiteren Verwendung dieser in organischer Phase vorliegenden Polymere zur Herstellung von lösemittelhaltigen Beschichtungszusammensetzungen handelt es sich bei den genannten Schleppmitteln um geeignete Lösemittel.

Dieses Verfahren zeichnet sich aufgrund der gleichzeitigen Wiederverwendung des Schleppmittels und des anfallenden Wassers ohne zusätzliche Verfahrensschritte durch ein außerordentliches Maß an Umweltverträglichkeit aus, da keine zu entsorgende Nebenprodukte entstehen, die im Vergleich mit bekannten Herstellungsverfahren in großen Mengen anfallen.

In einer besonderen Form der azeotropen Destillation wird diese dergestalt durchgerührt, daß die wäßrige Polymerdispersion in ein Gemisch eines Schleppmittels und einem hochsiedenden, organischen Lösemittel gegeben wird. Dieses hochsiedende, organische Lösemittel verhindert während der Überführung in die organische Phase ein Anbacken des Polymers an der Wand des Reaktors.

Das hochsiedende Lösemittel kann aus der Gruppe der Glykolester, wie z.B. Butylglykolacetat und/oder Butyldiglykolacetat ausgewählt sein.

Wie im Falle des Schleppmittels handelt es sich bei dem hochsiedenden Lösemittel ebenfalls um eine für eine lösemittelhaltige Beschichtungszusammensetzung übliche Komponente.

Das auf diese Weise erhältliche erfindungsgemäße Polymer kann insbesondere für lösemittelhaltige Beschichtungszusammensetzungen verwendet werden.

Eine bevorzugte Verwendungsform der Erfindung ist der Einsatz in lösemittelhaltigen Basislacken, insbesondere Effektbasislacken und Klarlacken, für die Decklackierung bzw. Lackierung von Automobilen.

Dieses in organischer Phase vorliegende erfindungsgemäße Polymer verleiht diesen lösemittelhaltigen Beschichtungszusammensetzungen ebenfalls ein ausgezeichnetes Applikationsverhalten und hervorragende dekorative Eigenschaften, die sich beispielsweise anhand eines ausgeprägten Metalliceffekts, einer sehr guten Resistenz gegen Ablaufen in der Vertikalen (SCA - Sagging Control Agent), Wolkenfreiheit, Resistenz gegen Wiederanlösen durch Klarlack, gute Schleifriefenabdeckung und der Erfüllung der in der Automobilindustrie üblichen Eigenschaftsvorgaben zeigen.

Die erfindungsgemäßen Polymere können ebenso gut für die Herstellung von lösemittelhaltigen Klarlacken, Coil-Coatingzusammensetzungen und Einbrennlacken für industrielle Anwendungen sowie Anstrichfarben für den Bautensektor verwendet werden.

Eine weitere Besonderheit des erfindungsgemäßen Polymers liegt in seiner hohen Scherbeständigkeit. Diese Eigenschaft ermöglicht erstmals eine Verwendung solcher Polymere zur Herstellung von Pigmentzubereitungen, insbesondere als Anreibemittel für Tönpasten. Hierdurch wird erreicht, daß die so hergestellten Tönpasten einen hohen Pigmentgehalt bei gleichzeitig niedriger Viskosität aufweisen.

Die nachfolgenden Beispiele dienen der Erläuterung der Erfindung.

**BEISPIELE:**

**Herstellung der Ausgangsprodukte**

**Polyesterdispersion 1:**

In einem 10 l Reaktionsgefäß mit Rührer und Füllkörperkolonne werden 292,2 g 1,6 Hexandiol, 1386,9 g einer dimerisierten Fettsäure (Pripol® 1013 der Firma Unichema) und 1238,3 g Di-Trimethylolpropan eingewogen und so aufgeheizt, daß die Kolonnenkopftemperatur 100 °C nicht überschreitet. Die max. Veresterungstemperatur beträgt 220°C. Bei einer Säurezahl unter 10 wird abgekühlt. Bei 150 °C werden 475,5 g Trimellithsäureanhydrid zugegeben und so aufgeheizt, daß die Kolonnenkopftemperatur 100 °C nicht überschreitet. Die max. Veresterungstemperatur beträgt 170 °C. Bei einer Säurezahl von 40 wird abgekühlt. Man erhält einen Polyester mit einem berechneten Molekulargewicht von 1.400 und einer Hydroxylzahl von 250.

Bei einer Temperatur unterhalb 100 °C werden eine Mischung aus 124 g Dimethylethanolamin und 4012 g vollentsalztem Wasser zudosiert und nachfolgend 1902 g vollentsalztes Wasser zugegeben. Man erhält eine stabile Dispersion mit einem Festkörpergehalt von 35 % (60 Minuten bei 120 °C) und einem pH-Wert von 5,60. Der Neutralisationsgrad beträgt 60 %.

**Polyesterdispersion 2:**

In einem 6 l Reaktionsgefäß mit Rührer und Füllkörperkolonne werden 327 g 1,6 Hexandiol, 271,6 g Maleinsäureangydrid, 692,9 g Di-Trimethylolpropan und 0,55 g Hydrochinon eingewogen und so aufgeheizt, daß die Kolonnenkopftemperatur 100 °C nicht überschreitet. Die max. Veresterungstemperatur beträgt 220 °C. Bei einer Säurezahl unter 10 wird abgekühlt. Bei 150 °C werden 266,1 g Trimellithsäureanhydrid zugegeben und so aufgeheizt, daß die Kolonnenkopftemperatur 100 °C nicht überschreitet. Die max. Veresterungstemperatur beträgt 170 °C. Bei einer Säurezahl von 55 wird abgekühlt. Man erhält einen Polyester mit einem berechneten Molekulargewicht von 1020 und einer Hydroxylzahl von 317.

Bei einer Temperatur unterhalb 100 °C werden eine Mischung aus 77,5 g Dimethylethanolamin und 2506 g vollentsalztem Wasser zudosiert und nachfolgend 290 g vollentsalztes Wasser zugegeben. Man erhält eine stabile Dispersion mit einem Festkörpergehalt von 34% (60 Minuten bei 120 °C) und einem pH-Wert von 5,53. Der Neutralisationsgrad beträgt 60 %.

**Polyesterdispersion 3:**

In einem 6 l Reaktionsgefäß mit Rührer und Füllkörperkolonne werden 177 g 1,6 Hexandiol, 335 g Trimethylolpropan, 266,4 g Phthalsäureanhydrid und 700 g Isomerginsäure® (isomerisierte Sojafettsäure der Firma Harburger Fettchemie) eingewogen und so aufgeheizt, daß die Kolonnenkopftemperatur 100 °C nicht überschreitet. Die max. Veresterungstemperatur beträgt 220 °C. Bei einer Säurezahl unter 10 wird abgekühlt. Bei 150°C werden 228,1 g Trimellithsäureanhydrid zugegeben und so aufgeheizt, daß die Kolonnenkopftemperatur 100 °C nicht überschreitet. Die max. Veresterungstemperatur beträgt 170 °C. Bei einer Säurezahl von 42 wird abgekühlt. Man erhält einen Polyester mit einem berechneten Molekulargewicht von 1.600 und einer Hydroxylzahl von 70.

Bei einer Temperatur unterhalb 100 °C werden eine Mischung aus 74,6 g Dimethylethanolaminund 1407 g vollentsalztem Wasser zudosiert und nachfolgend 1880 g vollentsalztes Wasser zugegeben. Man erhält eine stabile Dispersion mit einem Festkörpergehalt von 33% (60 Minuten bei 120 °C in einem Ofen gemessen) und einem pH-Wert von 6,70. Der Neutralisationsgrad beträgt 70 %.

**Polyesterdispersion 4:**

In einem 4 l Reaktionsgefäß mit Rührer und Füllkörperkolonne werden 332,8 g Neopentylglykol, 283,2 g 1,6 Hexandiol, 696 g einer dimerisierten Fettsäure (Pripol® 1013 der Firma Unichema) und 184,2 g Hexahydrophthalsäureanhydrid eingewogen und so aufgeheizt, daß die Kolonnenkopftemperatur 100 °C nicht überschreitet. Die max. Veresterungstemperatur beträgt 220 °C. Bei einer Säurezahl unter 10 wird abgekühlt. Bei 150°C werden 307,2 g Trimellithsäureanhydrid zugegeben und so aufgeheizt, daß die Kolonnenkopftemperatur 100 °C nicht überschreitet. Die max. Veresterungstemperatur beträgt 180 °C. Bei einer Säurezahl von 30 wird abgekühlt. Man erhält einen Polyester mit einem berechneten Molekulargewicht von 1.870 und einer Hydroxylzahl von 83.

Bei einer Temperatur unterhalb 100°C werden eine Mischung aus 42,7 g Dimethylethanolamin und 1.380 g vollentsalztem Wasser zudosiert und nachfolgend 1.910 g vollentsalztes Wasser zugegeben. Man erhält eine stabile Dispersion mit einem Festkörpergehalt von 30% (60 Minuten bei 120°C) und einem pH-Wert von 5,53. Der Neutralisationsgrad beträgt 60%.

**Polyester 5 (zur Herstellung der PU-Dispersion 2):**

In einem 4 l Reaktionsgefäß mit Rührer und Füllkörperkolonne werden 1352 g Neopentylglykol eingewogen und auf 140 °C aufgeheizt. Bei 140 °C werden 1248 g Trimellithsäureanhydrid zugegeben und so aufgeheizt, daß die Kolonnenkopftemperatur 100 °C nicht überschreitet. Die maximale Veresterungstemperatur beträgt 160 °C. Bei einer Säurezahl von 150 wird abgekühlt und mit 810 g Methylethylketon verdünnt. Man erhält einen Polyester mit einem berechneten Molekulargewicht von 380 und einer Hydroxylzahl von 295.

**Acrylatdispersion 1:**

In einem 4 l Reaktionsgefäß mit Rührer und 2 Zulaufgefäßen werden 200 g Methylethylketon eingewogen und auf 80 °C aufgeheizt. Bei 80°C wird aus einem Zulaufgefäß eine Mischung aus 289,6 g 2-Ehtylhexylacrylat, 250,3 g 4-Hydroxybutylacrylat und 100,1 g Acrylsäure innerhalb von 2 Stunden gleichmäßig zudosiert. Aus einem zweiten Zulaufgefäß wird eine Mischung aus 24 g Azoisobuttersäuredinitril und 160 g Methylethylketon innerhalb von 2,5 Stunden gleichmäßig zudosiert. Beide Zuläufe werden gleichzeitig gestartet. Nach Beendigung des zweiten Zulaufes wird 1,5 Stunden nachpolymerisiert.

Danach wird eine Mischung aus 12,4 g Dimethylethanolamin und 900 g vollentsalztes Wasser zugegeben und anschließend das Methylethylketon durch Vakuumdestillation entfernt. Man erhält eine stabile Dispersion mit einer Säurezahl von 121 und einem Festkörpergehalt von 43 % (60 Minuten bei 120 °C).

**Polyurethandispersion 1 (für Lackformulierung):**

In einem 6 l Reaktionsgefäß mit Rückflußkühler werden 602,3 g eines Polyesters mit einem zahlenmittleren Molekulargewicht von 1440 auf Basis einer dimerisierten Fettsäure (Pripol® 1013 von der Unichema) und 1,6-Hexandiol mit einer Säurezahl unter 3, 56 g Dimethylolpropionsäure, 306,2 g Tetramethylxylylendiisocyanat, 241 g Methylethylketon und 0,9 g Dibutylzinndilaurat eingewogen. Diese Mischung wird solange bei 80 °C gehalten, bis der Isocyanatgehalt 2,35% beträgt. Anschließend werden 90,4 g Trimethylolpropan und 23 g Methylethylketon zugegeben und bei 80 °C auf einen Isocyanatgehalt von < 0,03 % gefahren. Danach werden eine Mischung aus 33,5 g Dimethylethanolamin und 1085 g vollentsalztem Wasser und anschließend 1598 g vollentsalztes Wasser zugegeben. Nach einer Vakuumdestillation, in der das Methylethylketon entfernt wird, erhält man eine Dispersion mit einem Festkörpergehalt von 28 % (60 Minuten bei 120°C).

**Polyurethandispersion 2:**

In einem 2 l Reaktionsgefäß mit Rückflußkühler werden 319,2 g des Polyesters 5, 150 g Di-Trimethylolpropan, 201 g Methylethylketon und 0,5 g Dibutylzinndilaurat eingewogen. Diese Mischung wird auf 70 °C aufgeheizt. Bei 70 °C werden 265,9 g Tetramethylxylylendüsocyanat innerhalb einer Stunde zudosiert. Nach der Dosierung wird bei 80 °C gefahren, bis der Isocyanatgehalt < 0,03 % beträgt. Anschließend wird eine Mischung aus 32,1 g Dimethylethanolamin und 935 g vollentsalztem Wasser zugegeben. Nach einer Vakuumdestillation, in der das Methylethylketon entfernt wird, erhält man eine Dispersion mit einem Festkörpergehalt von 40 % (60 Minuten bei 120 °C).

**Herstellung der erfindungsgemäßen Polymere**

**Polymerdispersion 1:**

In einem 4 l Reaktionsgefäß mit Rückflußkühler und einem Zulaufgefäß werden 822,9 g der Polyesterdispersion 1 eingewogen und unter Rühren nacheinander 367,2 g Butylacrylat, 64,8 g Ethylenglykoldimethacrylat und 404,1g vollentsalztes Wasser zugegeben. Danach werden eine Mischung aus 1,3 g Ascorbinsäure und 45 g vollentsalztem Wasser und eine Mischung aus 0,009 g Eisen II-Sulfat und 45 g vollentsalztem Wasser zugegeben. Anschließend wird eine Mischung aus 2,16 g tert.-Butylhydroperoxid (70 %ig in Wasser) und 49,3 g vollentsalztem Wasser innerhalb von 10 Minuten zudosiert und die Polymerisation gestartet. Die Temperatur steigt bis 55 °C. Eine Stunde nach Erreichen der Maximaltemperatur wird bei 35°C eine Mischung aus 0,63 g Ascorbinsäure und 12,8 g vollentsalztes Wasser in 5 Minuten zudosiert.

Nach 15 Minuten werden 346,7 g eines handelsüblichen Melaminharzes (Cymel® 327 der Firma Dyno Cytec) und 786,7 g vollentsalztes Wasser dem Ansatz zugegeben. Es

wird auf 80 °C erhitzt und bei 80 °C 5 Stunden kondensiert. Danach wird abgekühlt und 7 g Dimethylethanolamin zugegeben.

Man erhält eine stabile Dispersion mit einem Festkörpergehalt von 31% (60 Minuten bei 120°C). Eine Probe dieser Dispersion mit Tetrahydrofuran verdünnt zeigt eine starke Trübung.

**Polymerdispersion 2:**

In einem 4 l Reaktionsgefäß mit Rückflußkühler und einem Zulaufgefäß werden 1.346 g der Polyesterdispersion 1 eingewogen und unter Rühren nacheinander 467,8 g Butylacrylat, 211,6 g 4-Hydroxybutylacrylat, 27,2 g Ethylenglykoldimethacrylat und 834 g vollentsalztes Wasser zugegeben. Danach werden eine Mischung aus 2,1 g Ascorbinsäure und 73,4 g vollentsalztem Wasser und eine Mischung aus 0,02 g Eisen II-Sulfat und 72,3 g vollentsalztem Wasser zugegeben. Anschließend wird eine Mischung aus 3,5 g tert.-Butylhydroperoxid (70%ig in Wasser) und 84,2 g vollentsalztem Wasser innerhalb von 10 Minuten zudosiert und die Polymerisation gestartet. Die Temperatur steigt bis 53 °C. Eine Stunde nach Erreichen der Maximaltemperatur wird bei 35 °C eine Mischung aus 1,06 g Ascorbinsäure und 24 g vollentsalztes Wasser in 5 Minuten zudosiert.

Nach 15 Minuten werden 131 g Cymel 327 und 423,7 g vollentsalztes Wasser dem Ansatz zugegeben. Es wird auf 80 °C erhitzt und bei 80 °C 5 Stunden kondensiert. Danach wird abgekühlt und 9 g Dimethylethanolamin zugegeben.

Man erhält eine stabile Dispersion mit einem Festkörpergehalt von 34 % (60 Minuten bei 120 °C). Eine Probe dieser Dispersion mit Tetrahydrofuran verdünnt zeigt eine starke Trübung.

**Polymerdispersion 3:**

In einem 2 l Reaktionsgefäß mit Rückflußkühler und einem Zulaufgefäß werden 500 g der Polyesterdispersion 3 eingewogen und unter Rühren nacheinander 213,6 g Butylacrylat, 37,7 g Ethylenglykoldimethacrylat und 217,7 g vollentsalztes Wasser zugegeben. Danach werden eine Mischung aus 0,75 g Ascorbinsäure und 26,2 g vollentsalztem Wasser und eine Mischung aus 0,01 g Eisen II-Sulfat und 25,3 g vollentsalztem Wasser zugegeben. Anschließend wird eine Mischung aus 1,26 g tert.-Butylhydroperoxid (70 %ig in Wasser) und 25,5 g vollentsalztem Wasser innerhalb von 10 Minuten zudosiert und die Polymerisation gestartet. Die Temperatur steigt bis 43 °C. Eine Stunde nach Erreichen der Maximaltemperatur wird bei 35 °C eine Mischung aus 0,38 g Ascorbinsäure und 13 g vollentsalztes Wasser in 5 Minuten zudosiert.

Nach 15 Minuten werden 79,8 g eines handelsüblichen Melaminharzes (Cymel® 327 der Firma Dyno Cytec) und 175 g vollentsalztes Wasser dem Ansatz zugegeben. Es wird auf 80 °C erhitzt und bei 80 °C 3 Stunden kondensiert. Danach wird abgekühlt und 3,1 g Dimethylethanolamin zugegeben.

Man erhält eine stabile Dispersion mit einem Festkörpergehalt von 32 % (60 Minuten bei 120 °C). Eine Probe dieser Dispersion mit Tetrahydrofuran verdünnt zeigt eine starke Trübung.

**Polymerdispersion 4:**

In einem 4 l Reaktionsgefäß mit Rückflußkühler und einem Zulaufgefäß werden 1.540 g der Polyesterdispersion 2 eingewogen und unter Rühren nacheinander 785,4 g Butylacrylat und 1123g vollentsalztes Wasser zugegeben. Danach werden eine Mischung aus 2,34 g Ascorbinsäure und 83,4 g vollentsalztem Wasser und eine Mischung aus 0,02 g Eisen II-Sulfat und 77,8 g vollentsalztem Wasser zugegeben. Anschließend wird eine Mischung aus 3,9 g tert.-Butylhydroperoxid (70 %ig in Wasser) und 92,4 g vollentsalztem Wasser innerhalb von 10 Minuten zudosiert und die Polymerisation gestartet. Die Temperatur steigt bis 35 °C. Eine Stunde nach Erreichen der Maximaltemperatur wird bei 35 °C eine Mischung aus 1,16 g Ascorbinsäure und 26 g vollentsalztes Wasser in 5 Minuten zudosiert.

Nach 15 Minuten werden 64,6 g eines handelsüblichen Melaminharzes (Cymel® 327 der Firma Dyno Cytec) und 50 g vollentsalztes Wasser dem Ansatz zugegeben. Es wird auf 80 °C erhitzt und bei 80 °C 3 Stunden kondensiert. Danach wird abgekühlt und 18,2 g Dimethylethanolamin zugegeben.

Man erhält eine stabile Dispersion mit einem Festkörpergehalt von 31% (60 Minuten bei 120 °C). Eine Probe dieser Dispersion mit Tetrahydrofuran verdünnt zeigt eine starke Trübung.

**Polymerdispersion 5:**

In einem 4 l Reaktionsgefäß mit Rückflußkühler und einem Zulaufgefäß werden 1.029 g der Polyesterdispersion 1 eingewogen und unter Rühren nacheinander 332,1 g Butylacrylat, 207,9 g 4-Hydroxybutylacrylat und 504,8 g vollentsalztes Wasser zugegeben. Danach werden eine Mischung aus 1,63 g Ascorbinsäure und 56,3 g vollentsalztem Wasser und eine Mischung aus 0,01 g Eisen II-Sulfat und 56,3 g vollentsalztem Wasser zugegeben. Anschließend wird eine Mischung aus 2,7 g tert.-Butylhydroperoxid (70 %ig in Wasser) und 61,6 g vollentsalztem Wasser innerhalb von 10 Minuten zudosiert und die Polymerisation gestartet. Die Temperatur steigt bis 52 °C. Eine Stunde nach Erreichen der Maximaltemperatur wird bei 35 °C eine Mischung aus 0,79 g Ascorbinsäure und 16 g vollentsalztes Wasser in 5 Minuten zudosiert.

Nach 15 Minuten werden 428,6 g Cymel 327 und 992,5 g vollentsalztes Wasser dem Ansatz zugegeben. Es wird auf 80 °C erhitzt und bei 80 °C 5 Stunden kondensiert. Danach wird abgekühlt und 9 g Dimethylethanolamin zugegeben. Man erhält eine stabile Dispersion mit einem Festkörpergehalt von 31% (60 Minuten bei 120 °C). Eine Probe dieser Dispersion mit Tetrahydrofuran verdünnt zeigt eine starke Trübung.

**Polymerdispersion 6:**

In einem 4 l Reaktionsgefäß mit Rückflußkühler und einem Zulaufgefäß werden 232,6 g der Acrylatdispersion 1 eingewogen und unter Rühren nacheinander eine Mischung aus 5,8 g Dimethylethanolamin und 481 g vollentsalztes Wasser sowie eine Mischung aus 388 g Butylacrylat und 12 g Allylmethacrylat zugegeben. Danach werden eine Mischung aus 1,2 g Ascorbinsäure und 42,8 g vollentsalztem Wasser und eine Mischung aus 0,015 g Eisen II-Sulfat und 65 g vollentsalztem Wasser zugegeben. Anschließend wird eine Mischung aus 2,9 g tert.-Butylhydroperoxid (70 %ig in Wasser) und 47,6 g vollentsalztem Wasser innerhalb von 10 Minuten zudosiert und die Polymerisation gestartet. Die Temperatur steigt bis 88 °C.

Eine Stunde nach Erreichen der Maximaltemperatur der Polymerisation werden 53,5 g eines handelsüblichen Melaminharzes (Cymel® 327 der Firma Dyno Cytec) und 64 g vollentsalztes Wasser dem Ansatz zugegeben. Es wird auf 80 °C erhitzt und 4 Stunden bei 80 °C kondensiert. Danach wird abgekühlt und eine Mischung aus 9,9 g Dimethylethanolamin und 89 g vollentsalztem Wasser zugegeben.

Man erhält eine stabile Dispersion mit einem Festkörpergehalt von 35 % (60 Minuten bei 120 °C). Eine Probe dieser Dispersion mit Tetrahydrofuran verdünnt zeigt eine Trübung.

**Polymerdispersion 7:**

In einem 4 l Reaktionsgefäß mit Rückflußkühler und einem Zulaufgefäß werden 186,1 g der Acrylatdispersion 1 eingewogen und unter Rühren nacheinander eine Mischung aus 4,6 g Dimethylethanolamin und 392 g vollentsalztes Wasser sowie eine Mischung aus 124,9 g 4-Hydroxybutylacrylat, 185,6 g Butylacrylat und 9,6 g Allylmethacrylat zugegeben. Danach werden eine Mischung aus 1 g Ascorbinsäure und 34,3 g vollentsalztem Wasser und eine Mischung aus 0,013 g Eisen II-Sulfat und 60 g vollentsalztem Wasser zugegeben. Anschließend wird eine Mischung aus 2,3 g Tert.-Butylhydroperoxid (70%ig in Wasser) und 31,8 g vollentsalztem Wasser innerhalb von 10 Minuten zudosiert und die Polymerisation gestartet. Die Temperatur steigt bis 86 °C.

Eine Stunde nach Erreichen der Maximaltemperatur der Polymerisation werden 190,5 g eines handelsüblichen Melaminharzes (Cymel® 327 der Firma Dyno Cytec) und 530 g vollentsalztes Wasser dem Ansatz zugegeben. Es wird auf 80 °C erhitzt und bei 80 °C 3 Stunden kondensiert. Danach wird abgekühlt und eine Mischung aus 9,3 g Dimethylethanolamin und 480 g vollentsalztem Wasser zugegeben.

Man erhält eine stabile Dispersion mit einem Festkörpergehalt von 25 % (60 Minuten bei 120 °C). Eine Probe dieser Dispersion mit Tetrahydrofuran verdünnt zeigt eine Trübung.

**Polymerdispersion 8:**

In einem 4 l Reaktionsgefäß mit Rückflußkühler und einem Zulaufgefäß werden 232,6 g der Acrylatdispersion 1 eingewogen und unter Rühren nacheinander eine Mischung aus 5,8 g Dimethylethanolamin und 481 g vollentsalztes Wasser sowie eine Mischung aus 300 g Butylacrylat und 100 g Methylmethacrylat zugegeben. Danach werden eine Mischung aus 1,2 g Ascorbinsäure und 42,8 g vollentsalztem Wasser und eine Mischung aus 0,015 g Eisen II-Sulfat und 65 g vollentsalztem Wasser zugegeben. Anschließend wird eine Mischung aus 2,9 g tert.-Butylhydroperoxid (70 %ig in Wasser) und 47,6 g vollentsalztem Wasser innerhalb von 10 Minuten zudosiert und die Polymerisation gestartet. Die Temperatur steigt bis 85 °C.

Eine Stunde nach Erreichen der Maximaltemperatur der Polymerisation werden 53,5 g eines handelsüblichen Melaminharzes (Cymel® 327 der Firma Dyno Cytec) und 174 g vollentsalztes Wasser dem Ansatz zugegeben. Es wird auf 80 °C erhitzt und bei 80 °C 4 Stunden kondensiert. Danach wird abgekühlt und eine Mischung aus 9,9 g Dimethylethanolamin und 139 g vollentsalztem Wasser zugegeben.

Man erhält eine stabile Dispersion mit einem Festkörpergehalt von 30 % (60 Minuten bei 120 °C). Eine Probe dieser Dispersion mit Tetrahydrofuran verdünnt zeigt eine Trübung.

**Polymerdispersion 9:**

In einem 6 l Reaktionsgefäß mit Rückflußkühler werden 922 g Polyurethandispersion 2 eingewogen und unter Rühren nacheinander 1084 g Butylacrylat, 22,2 g Allylmethacrylat, 1,4 g Dimethylethanolamin und 1371 g vollentsalztes Wasser zugegeben. Danach werden eine Mischung aus 3,3 g Ascorbinsäure und 115,2 g vollentsalztem Wasser und eine Mischung aus 0,011 g Eisen II-Sulfat und 110,6 g vollentsalztem Wasser zugegeben. Anschließend wird eine Mischung aus 5,5 g tert.-Butylhydroperoxid (70 %ig in Wasser) und 126,2 g vollentsalztem Wasser innerhalb von 10 Minuten zudosiert und die Polymerisation gestartet. Die Temperatur steigt bis 58 °C.
Eine Stunde nach Erreichen der Maximaltemperatur der Polymerisation werden bei 35 °C 157,8 g eines handelsüblichen Melaminharzes (Cymel® 327 der Firma Dyno Cytec) und 721 g vollentsalztes Wasser dem Ansatz zugegeben. Es wird auf 80 °C erhitzt und bei dieser Temperatur 5 Stunden kondensiert. Danach wird abgekühlt und 7,5 g Dimethylethanolamin zugegeben.
Man erhält eine stabile Dispersion mit einem Festkörpergehalt von 32 % (60 Minuten bei 120 °C). Eine Probe dieser Dispersion mit Tetrahydrofuran verdünnt zeigt eine starke Trübung.

**Verwendung der erfindungsgemäßen Polymere**

**Anwendungsbeispiel 1:**

Zur Herstellung eines Metallic-Wasserbasislackes werden 107,1 g der Polyurethandispersion 1 und 241,9 g der erfindungsgemäßen Polymerdispersion 1, eine Mischung aus 50 g Polyesterdispersion 4 , 0,4 g Dimethylethanolamin und 35 g vollentsalztem Wasser, 16,6 g eines handelsüblichen Melaminharzes (Cymel® 327 der Firma Dyno Cytec), 42,9 g einer handelsüblichen Aluminiumbronze, vorher angeteigt in 56,2 g Butylglykol und 31,6 g n-Butanol und einer Mischung aus 24,6 g eines handelsüblichen Acrylatverdickers (Latekoll® D der Firma BASF) und 46 g vollentsalztem Wasser werden zu einem Lack verarbeitet. Mit Dimethylethanolamin wird der pH-Wert auf 8,00 bis 8,30 und mit vollentsalztem Wasser auf eine Viskosität von 101 mPa·s eingestellt (gemessen bei 1000 $s^{-1}$ ).

**Anwendungsbeispiel 2:**

Es wird so verfahren wie in Beispiel 1. Jedoch werden die 241,9 g Polymerdispersion 1 ausgetauscht durch 220,6 g der erfindungsgemäßen Polymerdispersion 2.

**Anwendungsbeispiel 3:**

Es wird so verfahren wie in Beispiel 1. Jedoch werden die 241,9 g Polymerdispersion 1 ausgetauscht durch 234,4 g der erfindungsgemäßen Polymerdispersion 3.

**Anwendungsbeispiel 4:**

Es wird so verfahren wie in Beispiel 1. Jedoch werden die 241,9 g Polymerdispersion 1 ausgetauscht durch 241,9 g der erfindungsgemäßen Polymerdispersion 5.

**Anwendungsbeispiel 5:**

Zur Herstellung eines Metallic-Wasserbasislackes werden 107,1 g der Polyurethandispersion 1 und 214,3 g der erfindungsgemäßen Polymerdispersion 6, eine Mischung aus 50 g Polyesterdispersion 4, 0,4 g Dimethylethanolamin und 35 g vollentsalztem Wasser, 16,6 g eines handelsüblichen Melaminharzes (Cymel® 327 der Firma Dyno Cytec), 42,9 g einer handelsüblichen Aluminiumbronze, vorher angeteigt in 56,2 g Butylglykol und 31,6 g n-Butanol und einer Mischung aus 24,6 g eines handelsüblichen Acrylatverdikkers (Latekoll® D der Firma BASF) und 46 g vollentsalztem Wasser zu einem Lack verarbeitet. Mit Dimethylethanolamin wird der pH-Wert auf 8,00 bis 8,30 und mit vollentsalztem Wasser auf eine Viskosität von 100 mPa·s eingestellt (gemessen bei 1000 $s^{-1}$).

**Anwendungsbeispiel 6:**

Es wird so verfahren wie in Beispiel 1. Jedoch werden die 214,3 g Polymerdispersion 6 ausgetauscht durch 300 g der erfindungsgemäßen Polymerdispersion 7.

**Anwendungsbeispiel 7:**

Es wird so verfahren wie in Beispiel 1. Jedoch werden die 214,3 g Polymerdispersion 6 ausgetauscht durch 250 g der erfindungsgemäßen Polymerdispersion 8.

**Anwendungsbeispiel 8:**

Es wird so verfahren wie in Beispiel 1. Jedoch werden die 241,9 g Polymerdispersion 1 ausgetauscht durch 234,3 g Polymerdispersion 9.

**Vergleichsbeispiel 1:**

Es wird so verfahren wie in Beispiel 1. Jedoch werden die 288,5 g Polymerdispersion 1 ausgetauscht durch 250 g einer Mikrogeldispersion, hergestellt entsprechend dem Beispiel 4b) aus der EP-0 808 333 B1.

**Vergleichsbeispiel 2:**

Es wird so verfahren wie in Lackbeispiel 1. Jedoch werden die 288,5 g Polymerdispersion 1 ausgetauscht durch 125 g einer Mikrogeldispersion, hergestellt entsprechend dem Beispiel 4b) aus der EP-0 808 333 und 110,3 g einer Mikrogeldispersion, hergestellt aus dem Beispiel 9 aus der DE 39 40 316.

**Vergleichsbeispiel 3**

Zu der in Beispiel 4b aus EP-0 808 333 B1 angegebenen Menge an hergestellter Mikrogeldispersion werden anschließend 492 g eines handelsüblichen Melaminharzes (Cymel® 327 der Firma Dyno Cytec) und 500 g vollentsalztes Wasser zugegeben und der Ansatz auf 80 °C aufgeheizt. Bei Erreichen der Temperatur von 80 °C koaguliert der Ansatz und ist so einer weiteren Verarbeitung nicht zugänglich.

**Prüfung der Haftung unter Pulver/Pulverslurry:**

Die nach den zuvor beschriebenen Anwendungs- und Vergleichsbeispielen hergestellten wäßrigen Basislakke werden jeweils auf zwei mit einem handelsüblichen Elektrotauchlack (Enviro Prime der Firma PPG) und einem handelsüblichen Füller lackierte Stahlbleche mit einer Größe von 10 x 20 cm so gespritzt, daß Lackfilme mit einer Trockenfilmdicke von 12 - 15 μm erhalten werden. Die applizierten Naßfilme werden nach einer Vortrockenzeit von 5 min bei 60 °C jeweils mit einem handelsüblichen Pulverklarlack (PCC 10106 der Firma PPG, Trockenschichtdicke 65 μm) und einer Pulverklarlackslurry (hergestellt nach dem Beispiel aus der DE 196 13 547 C2, Trockenschichtdicke 40 μm) lackiert und nach einer Vortrocknung von 10 Minuten bei 60 °C anschließend 30 Minuten bei 140 °C eingebrannt. Die fertigen Lacke werden entsprechend der EN/ISO-Vorschrift 2409 (mittels Gitterschnitt) untersucht. Die Ergebnisse dieser Untersuchungen sind in der folgenden Tabelle angegeben. Hierbei bedeuten "Gt 0" sehr gut und "Gt 5" völlig unbrauchbar. Der von der Automobilindustrie akzeptierte Grenzwert liegt bei Gt 1.

**Prüfung der Neigung zum "mud-cracking" unter Pulvershirry:**

Die nach den zuvor beschriebenen Anwendungs- und Vergleichsbeispielen hergestellten wäßrigen Basislakke werden jeweils auf ein mit einem handelsüblichen Elektrotauchlack (Enviro Prime der Firma PPG) und einem handelsüblichen Füller lackiertes Stahlblech mit einer Größe von 20 x 50 cm so gespritzt, daß eine Trockenschichtdicke von 15 μm erhalten wird. Anschließend wird mit einer Pulverklarlackslurry (hergestellt nach dem Beispiel aus der DE 196 13 547 C2, Trockenschichtdicke 45 μm) lackiert. Nach einer Vortrocknung von 10 Minuten bei 50 °C werden die Schichten anschließend 30 Minuten bei 150 °C eingebrannt.
Das Auftreten von "mud-cracking" wird visuell beurteilt.

**Prüfung der Lanfsicherheit:**

Die nach den zuvor beschriebenen Anwendungs- und Vergleichsbeispielen hergestellten wäßrigen Basislakke werden mittels eines Spritzautomaten mit Druckluftzerstäubung auf eine senkrecht stehende Lochtafel mit einer keilförmig aufgebauten Trockenschichtdicke von 10 - 35 μm appliziert. Nach 3 Minuten Ablüften werden die Bleche senkrecht stehend 5 Minuten bei 80 °C vorgetrocknet und anschließend 10 Minuten bei 130 °C eingebrannt. Es wird die Schichtdicke des Basislackes angegeben, bei der die ersten Läufer beobachtet werden.

In der nachfolgenden Tabelle I sind die Ergebnisse der einzelnen Tests aufgeführt.

Tabelle I

| Lackbeispiele | Viskosität (bei 1000 s$^{-1}$) | Haftung unter Slurry | mud-cracking | Haftung unter Pulver | Läufergrenze |
|---|---|---|---|---|---|
| Beispiel 1 | 101 mPas | Gt 0 - 1 | nein | Gt 0 - 1 | 28 µm |
| Beispiel 2 | 103 mPas | Gt 0 - 1 | nein | Gt 0 - 1 | 30 µm |
| Beispiel 3 | 100 mPas | Gt 0 - 1 | nein | Gt 0 - 1 | 28 µm |
| Beispiel 4 | 99 mPas | Gt 1 | nein | Gt 1 | 31 µm |
| Beispiel 5 | 100 mPas | Gt 0 - 1 | nein | Gt 0 - 1 | 28 µm |
| Beispiel 6 | 102 mPas | Gt 0 - 1 | nein | Gt 1 | 33 µm |
| Beispiel 7 | 104 mPas | Gt 1 | nein | Gt 0 - 1 | 29 µm |
| Beispiel 8 | 102 mPas | Gt 0 - 1 | nein | Gt 0 - 1 | 28 µm |
| Vergleichsbsp. 1 | 101 mPas | Gt 2 | nein | Gt 2 | 14 µm |
| Vergleichsbsp. 2 | 98 mPas | Gt 5 | ja | Gt 5 | 18 µm |

Die Tabelle I zeigt deutlich, daß durch den Einsatz der erfindungsgemäßen Polymere Lackierungen erhalten werden, die sich durch eine sehr gute Haftung unter Klarlacken auf Basis von Pulver oder Pulverslurry auszeichnen. Ferner zeigen die erfindungsgemäßen Beispiele eine sehr gute Aluminiumorientierung sowie einen ausgezeichneten Decklackstand.

**Patentansprüche**

1.    In wäßriger Phase dispergierte Polymermikroteilchen, deren Äußeres vollständig vernetzt ist, erhältlich durch Polymerisation in wäßriger Phase einer Monomerenmischung aus

i) 50 bis 98 Gew.-% mindestens einer ethylenisch monofunktionellen Verbindung;
ii) 2 bis 50 Gew.-% mindestens einer ethylenisch di- oder multifunktionellen Verbindung;

in Gegenwart eines Polymers, ausgewählt aus einem

-    Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
-    Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
-    Polyacrylat mit einem zahlenmittleren Molekulargewicht von 2.000 bis 100.000, einer Säurezahl zwischen 25 und 300 und einer OH-Zahl zwischen 50 bis 250;

gefolgt von einer Umsetzung des aus der Polymerisation erhaltenen Produkts mit einem Vernetzer.

2.    In wäßriger Phase dispergierte Polymermikroteilchen, deren Äußeres vollständig vernetzt ist, erhältlich durch Polymerisation in wäßriger Phase einer Monomerenmischung aus mindestens einer ethylenisch monofunktionellen Verbindung; in Gegenwart eines Polymers, ausgewählt aus einem

-    Polyesterpolyol mit einem zahlenmittleren Molekulargewicht von 500 bis 10.000, einer Säurezahl zwischen 22 und 224 und einer OH-Zahl zwischen 60 bis 400 durchgeführt wird, Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
-    Polyacrylat mit einem zahlenmittleren Molekulargewicht von 2.000 bis 100.000, einer Säurezahl zwischen 25 und 300 und einer OH-Zahl zwischen 50 bis 250;

gefolgt von einer Umsetzung des aus der Polymerisation erhaltenen Produkts mit einem Vernetzer.

**3.** In wäßriger Phase dispergierte Polymermikroteilchen, deren Äußeres vollständig vernetzt ist, nach einem der vorhergehenden Ansprüche, **dadurch gekennzeichnet, daß** das aus einem Polyesterpolyol, Polyurethan und/oder Polyacrylat ausgewählte Polymer im statistischen Mittel mindestens eine freie Carboxylgruppe pro Molekül aufweist, die aus Trimellithsäure oder Trimellithsäureanhydrid stammt.

**4.** In wäßriger Phase dispergierte Polymermikroteilchen, deren Äußeres vollständig vernetzt ist, nach einem der vorhergehenden Ansprüche, **dadurch gekennzeichnet, daß** die ethylenisch monofunktionelle Verbindung ausgewählt ist aus der Gruppe der Alkylester oder Hydroxyalkylester der Acryl- oder Methacrylsäure.

**5.** In wäßriger Phase dispergierte Polymermikroteilchen, deren Äußeres vollständig vernetzt ist, nach Anspruch 4, **dadurch gekennzeichnet, daß** die ethylenisch monofunktionelle Verbindung Vinylacetat, Vinyltoluol, Styrol, Acrylamid oder ein Alkyl-(meth)acrylat oder Hydroxyalkyl(meth)acrylat mit 1 bis 18 Kohlenstoffatomen im Alkylrest ist.

**6.** In wäßriger Phase dispergierte Polymermikroteilchen, deren Äußeres vollständig vernetzt ist, nach Anspruch 5, **dadurch gekennzeichnet, daß** das Alkyl(meth)acrylat ausgewählt ist aus der Gruppe von Laurylacrylat, Isobomyl (meth)acrylat, Cyclohexyl(meth)acrylat, tert.-Butylcylohexyl(meth)acrylat, Benzyl(meth)acrylat, Glycidyl-(meth) acrylat und Trimethylcylohexyl(meth)acrylat.

**7.** In wäßriger Phase dispergierte Polymermikroteilchen, deren Äußeres vollständig vernetzt ist, nach Anspruch 5, **dadurch gekennzeichnet, daß** das Alkyl(meth)acrylat ausgewählt ist aus der Gruppe von α-Ethylhexyl(meth) acrylat, Methyl(meth)acrylat, n-Butyl(meth)acrylat und tert.-Buryl(meth)acrylat.

**8.** In wäßriger Phase dispergierte Polymermikroteilchen, deren Äußeres vollständig vernetzt ist, nach Anspruch 5, **dadurch gekennzeichnet, daß** das Hydroxyalkyl-(meth)acrylat ausgewählt ist aus der Gruppe von 2-Hydroxyethyl (meth)acrylat, 2-Hydroxypropyl(meth)acrylat, 2-Hydroxybutyl(meth)acrylat, Hexandiol-1,6-mono-(meth)acrylat und 4-Hydroxybutyl(meth)acrylat.

**9.** In wäßriger Phase dispergierte Polymermikroteilchen, deren Äußeres vollständig vernetzt ist, nach einem der vorhergehenden Ansprüche, **dadurch gekennzeichnet, daß** die ethylenisch di- oder multifunktionelle Verbindung ausgewählt ist aus der Gruppe der Diacrylate, Triacrylate und/oder (Meth)acrylsäureestern von polyfunktionellen Alkoholen.

**10.** In wäßriger Phase dispergierte Polymermikroteilchen, deren Äußeres vollständig vernetzt ist, nach Anspruch 9, **dadurch gekennzeichnet, daß** die ethylenisch dioder multifunktionelle Verbindung Allyl(meth)acrylat, Hexandioldi (meth)acrylat, Ethylenglykoldi(meth)acrylat, Neopentylglykoldi(meth)acrylat, Bucandioldi(meth)acrylat oder Trimethylolpropantri(meth)acrylat ist.

**11.** In wäßriger Phase dispergierte Polymermikroteilchen, deren Äußeres vollständig vernetzt ist, nach einem der vorhergehenden Ansprüche, **dadurch gekennzeichnet, daß** die ethylenisch monofunktionelle Verbindung teilweise ein Polyester oder ein Polyurethan ist mit einer Säurezahl von weniger als 5, insbesondere weniger als 3, der bzw. das im statistischen Mittel bis zu eine polymerisierbare Doppelbindung pro Molekül enthält.

**12.** In wäßriger Phase dispergierte Polymermikroteilchen, deren Äußeres vollständig vernetzt ist, nach einem der vorhergehenden Ansprüche, **dadurch gekennzeichnet, daß** die ethylenisch di- oder multifunktionelle Verbindung teilweise ein Polyester oder ein Polyurethan ist mit einer Säurezahl von weniger als 5, insbesondere weniger als 3, der bzw. das im statistischen Mittel mindestens 1,5 polymerisierbare Doppelbindungen pro Molekül enthält.

**13.** In wäßriger Phase dispergierte Polymermikroteilchen, deren Äußeres vollständig vernetzt ist, nach einem der vorhergehenden Ansprüche, **dadurch gekennzeichnet, daß** das während der Polymerisation verwendete

- Polyesterpolyol ein zahlenmittleres Molekulargewicht zwischen 700 und 5.000, besonders bevorzugt zwischen 750 und 2.000; eine Säurezahl zwischen 35 und 150, besonders bevorzugt zwischen 40 und 120; und eine OH-Zahl zwischen 150 und 300, besonders bevorzugt zwischen 220 und 280;
- Polyurethan ein zahlenmittleres Molekulargewicht zwischen 700 und 5.000, besonders bevorzugt zwischen 750 und 2.500; eine Säurezahl zwischen 30 und 120, besonders bevorzugt zwischen 40 und 80; und eine OH-Zahl zwischen 150 und 300, besonders bevorzugt zwischen 220 und 280; und/oder

- das Polyacrylat ein zahlenmittleres Molekulargewicht zwischen 2.500 und 20.000, besonders bevorzugt zwischen 4.000 und 10.000; eine Säurezahl zwischen 35 und 150, besonders bevorzugt zwischen 40 und 125; und eine OH-Zahl zwischen 100 und 250, besonders bevorzugt zwischen 150 und 200; hat.

14. In wäßriger Phase dispergierte Polymermikroteilchen, deren Äußeres vollständig vernetzt ist, nach einem der vorhergehenden Ansprüche, **dadurch gekennzeichnet, daß** das während der Polymerisation verwendete Polyesterpolyol keine polymerisierbare Doppelbindung aufweist und erhältlich ist aus der Umsetzung mindestens einer Polycarbonsäure ohne polymerisierbare Doppelbindung mit mindestens einem Polyol ohne polymerisierbare Doppelbindung.

15. In wäßriger Phase dispergierte Polymermikroteilchen, deren Äußeres vollständig vernetzt ist, nach einem der Ansprüche 1 bis 13, **dadurch gekennzeichnet, daß** das Polyesterpolyol im statistischen Mittel mindestens eine polymerisierbare Doppelbindung pro Molekül aufweist und erhältlich ist aus der Umsetzung

i) mindestens einer Polycarbonsäure ohne polymerisierbare Doppelbindung mit mindestens einem Polyol mit mindestens einer polymerisierbaren Doppelbindung;
ii) mindestens einer Polycarbonsäure mit mindestens einer polymerisierbaren Doppelbindung mit mindestens einem Polyol ohne polymerisierbare Doppelbindung; oder
iii) mindestens einer Polycarbonsäure mit mindestens einer polymerisierbaren Doppelbindung mit mindestens einem Polyol mit mindestens einer polymerisierbaren Doppelbindung.

16. In wäßriger Phase dispergierte Polymermikroteilchen, deren Äußeres vollständig vernetzt ist, nach Anspruch 14 oder 15, **dadurch gekennzeichnet, daß** die Polycarbonsäure ohne polymerisierbare Doppelbindung ausgewählt ist aus der Gruppe von

• Bernsteinsäure, Glutarsäure, Adipinsäure, Azelainsäure, Terephthalsäure, Phthalsäure, Isophthalsäure, Endomethylentetrahydrophthalsäure, 1,2-Cyclohexandicarbonsäure, 1,3-Cyclohexandicarbonsäure, 1,4-Cyclohexandicarbonsäure, Dodecandisäure, Dodecandicarbonsäure;
• dimeren und polymeren Fettsäuren sowie Trimellithsäure;

sowie den möglichen Anhydriden hiervon.

17. In wäßriger Phase dispergierte Polymermikroteilchen, deren Äußeres vollständig vernetzt ist, nach einem der vorhergehenden Ansprüche 14 bis 16, **dadurch gekennzeichnet, daß** das Polyol ohne polymerisierbare Doppelbindung ausgewählt ist aus der Gruppe von

• Ethylenglykol, Diethylenglykol, Triethylenglykol, Tetraethylenglykol, Hexaethylenglykol, 1,2-Propylenglykol, 1,3-Propylenglykol, 1,4-Butandiol, 1,5-Pentandiol, 1,6-Hexandiol, 2,2-Dimethylpropandiol, 2,2,4-Trimethylpentandiol, 1,3-Dimethylolcyclohexan, 1,4-Dimethylolcydohexan, Hydroxypivalinsäureneopentylglykolmonoester, Dimethylolpropionsäure und perhydriertem Bisphenol A;
• Trimethylolpropan und Glycerin; sowie
• Pentaerythrit, Dipentaerythrit und Di-(Trimethylolpropan).

18. In wäßriger Phase dispergierte Polymermikroteilchen, deren Äußeres vollständig vernetzt ist, nach einem der Ansprüche 15 bis 17, **dadurch gekennzeichnet, daß** die mindestens eine polymerisierbare Doppelbindung aufweisende Polycarbonsäure ausgewählt ist aus der Gruppe von Maleinsäure, Fumarsäure, Itaconsäure, Citraconsäure und Aconitsäure sowie den möglichen Anhydriden hiervon.

19. In wäßriger Phase dispergierte Polymermikroteilchen, deren Äußeres vollständig vernetzt ist, nach einem der Ansprüche 15 bis 18, **dadurch gekennzeichnet, daß** das mindestens eine polymerisierbare Doppelbindung aufweisende Polyol ausgewählt ist aus der Gruppe

• von 1,4-Butendiol, Dimethylolpropionsäureallylester, Dimethylolpropionsäurevinylester, Trimethylolpropanmonoallylether, Glycerinmonoallylether;
• der Anlagerungsprodukte aus Allylglycidylether oder Glycidyl(meth)acrylat an einen eine Carboxylgruppe aufweisenden Polyester; sowie
• der Anlagerungsprodukte aus Allylglycidylether oder Glycidyl(meth)acrylat an Dimethylolpropionsäure.

**EP 1 173 491 B1**

**20.** In wäßriger Phase dispergierte Polymermikroteilchen, deren Äußeres vollständig vernetzt ist, nach einem der Ansprüche 13 bis 19, **dadurch gekennzeichnet, daß** das Polyesterpolyol durch mindestens eine Monocarbonsäure modifiziert ist, ausgewählt aus der Gruppe der gesättigten oder ungesättigten, isolierten oder konjugierten, linearen oder verzweigten Fettsäuren sowie der Benzoesäure oder Crotonsäure.

**21.** In wäßriger Phase dispergierte Polymermikroteilchen, deren Äußeres vollständig vernetzt ist, nach Anspruch 20, **dadurch gekennzeichnet, daß** die Fettsäure 5 bis 22 Kohlenstoffatome ausweist und insbesondere Linolsäure, Ölsäure, Sojafettsäure, Isononansäure oder Isostearinsäure ist.

**22.** In wäßriger Phase dispergierte Polymermikroteilchen, deren Äußeres vollständig vernetzt ist, nach einem der vorhergehenden Ansprüche, **dadurch gekennzeichnet, daß** der Vernetzer ein Aminoplastharz oder ein Polyisocyanat ist.

**23.** In wäßriger Phase dispergierte Polymermikroteilchen, deren Äußeres vollständig vernetzt ist, nach Anspruch 22, **dadurch gekennzeichnet, daß** das Aminoplastharz ein Melaminharz ist.

**24.** In wäßriger Phase dispergierte Polymermikroteilchen, deren Äußeres vollständig vernetzt ist, nach Anspruch 22, **dadurch gekennzeichnet, daß** das Polyisocyanat ausgewählt ist aus der Gruppe von 1,3-Bis(1-isocyanato-1-methylethyl)benzol (TMXDI, m-Tetramethylxylylendiisocyanat), (4,4'-Dicyclohexylmethandiisocyanat, Desmodur W), Isophorondiisocyanat (IPDI, 3,5,5-Trimethyl-1-isocyanato-3-isocyanatomethylcyclohexan) und 2,4,6-Trioxo-1,3,5-tris(6-isocyanatohexyl)hexahydro-1,3,5-triazin (Desmodur N3300).

**25.** In wäßriger Phase dispergierte Polymermikroteilchen, deren Äußeres vollständig vernetzt ist, nach Anspruch 22 oder 24, **dadurch gekennzeichnet, daß** das Polyisocyanat hydrophil modifiziert ist.

**26.** In wäßriger Phase dispergierte Polymermikroteilchen, deren Äußeres vollständig vernetzt ist, nach einem der vorhergehenden Ansprüche, **dadurch gekennzeichnet, daß** der Neutralisationsgrad des Polyesterpolyols während des gesamten Herstellungsvorgangs zwischen 30 und 100 %, insbesondere zwischen 50 und 80 %, liegt.

**27.** In wäßriger Phase dispergierte Polymermikroteilchen, deren Äußeres vollständig vernetzt ist, nach einem der vorhergehenden Ansprüche, **dadurch gekennzeichnet, daß** die Polymerisation als Emulsionspolymerisation unter Verwendung eines Düsenstrahldispergators oder eines Wasserstrahlemulgators durchgeführt wird.

**28.** In wäßriger Phase dispergierte Polymermikroteilchen, deren Äußeres vollständig vernetzt ist, nach einem der vorhergehenden Ansprüche, **dadurch gekennzeichnet, daß** die Polymerisation als Redoxpolymerisation unter Verwendung von Ascorbinsäure, Eisen(II)-sulfat und mindestens eines Hydroperoxids durchgeführt wird.

**29.** In wäßriger Phase dispergierte Polymermikroteilchen, deren Äußeres vollständig vernetzt ist, nach einem der vorhergehenden Ansprüche, **dadurch gekennzeichnet, daß** es in eine wasserfreie Form überführt wird.

**30.** Verwendung von in wäßriger Phase dispergierter Polymermikroteilchen nach einem der vorhergehenden Ansprüche für wäßrige oder lösemittelhaltige Beschichtungszusammensetzungen.

**31.** Verwendung nach Anspruch 30 für wäßrige oder lösemittelhaltige Basislacke, Effektbasislacke oder Klarlacke in der Automobilindustrie.

**32.** Verwendung nach Anspruch 30 oder 31 für wäßrige oder lösemittelhaltige Pigmentzubereitungen.

**Claims**

**1.** Polymer microparticles which are dispersed in aqueous phase and whereof the exterior is completely cross-linked, obtainable by polymerisation in aqueous phase of a monomer mixture prepared from

   i) from 50 to 98 wt.% of at least one ethylenically monofunctional compound;
   ii) from 2 to 50 wt.% of at least one ethylenically difunctional or polyfunctional compound;

   in the presence of a polymer selected from among a

18

- polyester polyol having a number average molecular weight of 500 to 10,000, an acid value between 22 and 224 and an OH value between 60 and 400 is carried out
- polyurethane having a number average molecular weight of 500 to 20,000, an acid value between 25 and 150 and an OH value between 50 to 350; wherein the polyurethane has on a statistical average at least one free carboxyl group per molecule, which originates in a polyester polyol; and/or
- polyacrylate having a number average molecular weight of 2,000 to 100,000, an acid value between 25 and 300 and an OH value between 50 to 250;

followed by a reaction with a cross-linking agent of the product obtained from the polymerisation.

2.  Polymer microparticles which are dispersed in aqueous phase and whereof the exterior is completely cross-linked, obtainable by polymerisation in aqueous phase of a monomer mixture prepared from at least one ethylenically monofunctional compound; in the presence of a polymer selected from among a

    - polyester polyol having a number average molecular weight of 500 to 10,000, an acid value between 22 and 224 and an OH value between 60 to 400 is carried out,
    - polyurethane having a number average molecular weight of 500 to 20,000, an acid value between 25 and 150 and an OH value between 50 to 350; wherein the polyurethane has on a statistical average at least one free carboxyl group per molecule, which originates in a polyester polyol; and/or
    - polyacrylate having a number average molecular weight of 2,000 to 100,000, an acid value between 25 and 300 and an OH value between 50 to 250;

    followed by a reaction with a cross-linking agent of the product obtained from the polymerisation.

3.  Polymer microparticles which are dispersed in aqueous phase and whereof the exterior is completely cross-linked, according to one of the preceding claims, **characterised in that** the polymer which is selected from among a polyester polyol, polyurethane and/or polyacrylate has on a statistical average at least one free carboxyl group per molecule, which originates in trimellitic acid or trimellitic acid anhydride.

4.  Polymer microparticles which are dispersed in aqueous phase and whereof the exterior is completely cross-linked, according to one of the preceding claims, **characterised in that** the ethylenically monofunctional compound is selected from the group comprising the alkyl esters or hydroxyalkyl esters of acrylic or methacrylic acid.

5.  Polymer microparticles which are dispersed in aqueous phase and whereof the exterior is completely cross-linked, according to Claim 4, **characterised in that** the ethylenically monofunctional compound is vinyl acetate, vinyltoluene, styrene, acrylamide or an alkyl (meth)acrylate or hydroxyalkyl (meth)acrylate having 1 to 18 carbon atoms in the alkyl radical.

6.  Polymer microparticles which are dispersed in aqueous phase and whereof the exterior is completely cross-linked, according to Claim 5, **characterised in that** the alkyl (meth)acrylate is selected from the group comprising lauryl acrylate, isobornyl (meth)acrylate, cyclohexyl (meth)acrylate, tert.-butylcyclohexyl (meth)acrylate, benzyl (meth)acrylate, glycidyl (meth)acrylate and trimethylcyclohexyl (meth)acrylate.

7.  Polymer microparticles which are dispersed in aqueous phase and whereof the exterior is completely cross-linked, according to Claim 5, **characterised in that** the alkyl (meth)acrylate is selected from the group comprising $\alpha$-ethylhexyl (meth)acrylate, methyl (meth)acrylate, n-butyl (meth)acrylate and tert.-butyl (meth) acrylate .

8.  Polymer microparticles which are dispersed in aqueous phase and whereof the exterior is completely cross-linked, according to Claim 5, **characterised in that** the hydroxyalkyl (meth)acrylate is selected from the group comprising 2-hydroxyethyl (meth)acrylate, 2-hydroxypropyl (meth)acrylate, 2-hydroxybutyl (meth)acrylate, hexanediol-1,6-mono(meth)acrylate and 4-hydroxybutyl (meth)acrylate.

9.  Polymer microparticles which are dispersed in aqueous phase and whereof the exterior is completely cross-linked, according to one of the preceding claims, **characterised in that** the ethylenically difunctional or polyfunctional compound is selected from the group comprising the diacrylates, triacrylates and/or (meth)acrylic acid esters of polyfunctional alcohols.

10. Polymer microparticles which are dispersed in aqueous phase and whereof the exterior is completely cross-linked, according to Claim 9, **characterised in that** the ethylenically difunctional or polyfunctional compound is allyl (meth) acrylate, hexanediol di(meth)acrylate, ethylene glycol di(meth)acrylate, neopentyl glycol di(meth)acrylate, butanediol di(meth)acrylate or trimethylolpropane tri(meth)acrylate.

11. Polymer microparticles which are dispersed in aqueous phase and whereof the exterior is completely cross-linked, according to one of the preceding claims, **characterised in that** the ethylenically monofunctional compound is in part a polyester or polyurethane having an acid value of less than 5, in particular less than 3, which contains on a statistical average up to one polymerisable double bond per molecule.

12. Polymer microparticles which are dispersed in aqueous phase and whereof the exterior is completely cross-linked, according to one of the preceding claims, **characterised in that** the ethylenically difunctional or polyfunctional compound is in part a polyester or polyurethane having an acid value of less than 5, in particular less than 3, which contains on a statistical average at least 1.5 polymerisable double bonds per molecule.

13. Polymer microparticles which are dispersed in aqueous phase and whereof the exterior is completely cross-linked, according to one of the preceding claims, **characterised in that** the:

- polyester polyol which is used during the polymerisation has a number average molecular weight between 700 and 5,000, particularly preferably between 750 and 2,000; an acid value between 35 and 150, particularly preferably between 40 and 120; and an OH value between 150 and 300, particularly preferably between 220 and 280;
- polyurethane which is used during the polymerisation has a number average molecular weight between 700 and 5,000, particularly preferably between 750 and 2,500; an acid value between 30 and 120, particularly preferably between 40 and 80; and an OH value between 150 and 300, particularly preferably between 220 and 280; and/or
- polyacrylate which is used during the polymerisation has a number average molecular weight between 2,500 and 20,000, particularly preferably between 4,000 and 10,000; an acid value between 35 and 150, particularly preferably between 40 and 125; and an OH value between 100 and 250, particularly preferably between 150 and 200.

14. Polymer microparticles which are dispersed in aqueous phase and whereof the exterior is completely cross-linked, according to one of the preceding claims, **characterised in that** the polyester polyol which is used during the polymerisation has no polymerisable double bond and is obtainable from the reaction of at least one polycarboxylic acid having no polymerisable double bond with at least one polyol having no polymerisable double bond.

15. Polymer microparticles which are dispersed in aqueous phase and whereof the exterior is completely cross-linked, according to one of Claims 1 to 13, **characterised in that** the polyester polyol has on a statistical average at least one polymerisable double bond per molecule and is obtainable from the reaction of

i) at least one polycarboxylic acid having no polymerisable double bond with at least one polyol having at least one polymerisable double bond;
ii) at least one polycarboxylic acid having at least one polymerisable double bond with at least one polyol having no polymerisable double bond; or
iii) at least one polycarboxylic acid having at least one polymerisable double bond with at least one polyol having at least one polymerisable double bond.

16. Polymer microparticles which are dispersed in aqueous phase and whereof the exterior is completely cross-linked, according to Claim 14 or 15, **characterised in that** the polycarboxylic acid having no polymerisable double bond is selected from the group comprising

- succinic acid, glutaric acid, adipic acid, azelaic acid, terephthalic acid, phthalic acid, isophthalic acid, endomethylene tetrahydrophthalic acid, 1,2-cyclohexane dicarboxylic acid, 1,3-cyclohexane dicarboxylic acid, 1,4-cyclohexane dicarboxylic acid, 1,12-dodecanedioic acid, dodecane dicarboxylic acid;
- dimeric and polymeric fatty acids as well as trimellitic acid;

as well as the possible anhydrides thereof.

17. Polymer microparticles which are dispersed in aqueous phase and whereof the exterior is completely cross-linked, according to one of the preceding Claims 14 to 16, **characterised in that** the polyol having no polymerisable double bond is selected from the group comprising

- ethylene glycol, diethylene glycol, triethylene glycol, tetraethylene glycol, hexaethylene glycol, 1,2-propylene glycol, 1,3-propylene glycol, 1,4-butanediol, 1,5-pentanediol, 1,6-hexanediol, 2,2-dimethylpropanediol, 2,2,4-trimethylpentanediol, 1,3-dimethylol cyclohexane, 1,4-dimethylol cyclohexane, hydroxypivalic acid neopentyl glycol monoester, dimethylolpropionic acid and perhydrogenated bisphenol A;
- trimethylolpropane and glycerol; as well as
- pentaerythritol, dipentaerythritol and di-(trimethylolpropane).

18. Polymer microparticles which are dispersed in aqueous phase and whereof the exterior is completely cross-linked, according to one of Claims 15 to 17, **characterised in that** the polycarboxylic acid which has at least one polymerisable double bond is selected from the group comprising maleic acid, fumaric acid, itaconic acid, citraconic acid and aconitic acid as well as the possible anhydrides thereof.

19. Polymer microparticles which are dispersed in aqueous phase and whereof the exterior is completely cross-linked, according to one of Claims 15 to 18, **characterised in that** the polyol having at least one polymerisable double bond is selected from the group comprising

- 1,4-butenediol, dimethylolpropionic acid allyl ester, dimethylolpropionic acid vinyl ester, trimethylolpropane monoallyl ether, glycerol monoallyl ether;
- the products of an addition reaction between allyl glycidyl ether or glycidyl (meth)acrylate and a polyester having a carboxyl group; as well as
- the products of an addition reaction between allyl glycidyl ether or glycidyl (meth)acrylate and dimethylolpropionic acid.

20. Polymer microparticles which are dispersed in aqueous phase and whereof the exterior is completely cross-linked, according to one of Claims 13 to 19, **characterised in that** the polyester polyol is modified by at least one monocarboxylic acid, selected from the group comprising the saturated or unsaturated, isolated or conjugated, linear or branched-chain fatty acids as well as of benzoic acid or crotonic acid.

21. Polymer microparticles which are dispersed in aqueous phase and whereof the exterior is completely cross-linked, according to Claim 20, **characterised in that** the fatty acid has 5 to 22 carbon atoms and is in particular linoleic acid, oleic acid, soybean oil fatty acid, isononanoic acid or isostearic acid.

22. Polymer microparticles which are dispersed in aqueous phase and whereof the exterior is completely cross-linked, according to one of the preceding claims, **characterised in that** the cross-linking agent is an amino resin or a polyisocyanate.

23. Polymer microparticles which are dispersed in aqueous phase and whereof the exterior is completely cross-linked, according to Claim 22, **characterised in that** the amino resin is a melamine resin.

24. Polymer microparticles which are dispersed in aqueous phase and whereof the exterior is completely cross-linked, according to Claim 22, **characterised in that** the polyisocyanate is selected from the group comprising 1,3-bis (1-isocyanato-1-methylethyl) benzene (TMXDI, m-tetramethylxylylene diisocyanate), (4,4'-dicyclohexylmethane diisocyanate, Desmodur W), isophorone diisocyanate (IPDI, 3,5,5-trimethyl-1-isocyanato-3-isocyanatomethyl cyclohexane) and 2,4,6-trioxo-1,3,5-tris(6-isocyanatohexyl) hexahydro-1,3,5-triazine (Desmodur N3300).

25. Polymer microparticles which are dispersed in aqueous phase and whereof the exterior is completely cross-linked, according to Claim 22 or 24,
**characterised in that** the polyisocyanate is hydrophilically modified.

26. Polymer microparticles which are dispersed in aqueous phase and whereof the exterior is completely cross-linked, according to one of the preceding claims, **characterised in that** the degree of neutralisation of the polyester polyol throughout the preparation process is between 30 and 100%, in particular between 50 and 80%.

27. Polymer microparticles which are dispersed in aqueous phase and whereof the exterior is completely cross-linked, according to one of the preceding claims, **characterised in that** the polymerisation is carried out as an emulsion polymerisation with use of a nozzle jet-type disperser or a water jet-type emulsifier.

28. Polymer microparticles which are dispersed in aqueous phase and whereof the exterior is completely cross-linked, according to one of the preceding claims, **characterised in that** the polymerisation is carried out as a redox polymerisation with use of ascorbic acid, iron(II) sulfate and at least one hydroperoxide.

29. Polymer microparticles which are dispersed in aqueous phase and whereof the exterior is completely cross-linked, according to one of the preceding claims, **characterised in that** it is converted to an anhydrous form.

30. Use of polymer microparticles which are dispersed in aqueous phase according to one of the preceding claims, for aqueous or solvent-containing coating compositions.

31. Use according to Claim 30 for aqueous or solvent-containing base coats, special-effect base coats or clear coats in the automotive industry.

32. Use according to Claim 30 or 31 for aqueous or solvent-containing pigment preparations.

**Revendications**

1. Microparticules de polymère dispersées en phase aqueuse, dont l'extérieur est totalement réticulé, susceptibles d'être obtenues par polymérisation en phase aqueuse d'un mélange de monomères formé de :

   (i) 50 à 98 % en poids d'au moins un composé éthyléniquement monofonctionnel ;
   (ii) 2 à 50 % en poids d'au moins un composé éthyléniquement di- ou multifonctionnel ;

   en présence d'un polymère choisi parmi :

   - un polyesterpolyol présentant une masse moléculaire moyenne en nombre de 500 à 10 000, un indice d'acide entre 22 et 224 et un indice d'OH entre 60 et 400 ;
   - un polyuréthanne présentant une masse moléculaire moyenne en nombre de 500 à 20 000, un indice d'acide entre 25 et 150 et un indice d'OH entre 50 et 350, le polyuréthanne présentant en moyenne statistique par molécule au moins un groupe carboxyle libre issu d'un polyesterpolyol ; et/ou
   - un polyacrylate présentant une masse moléculaire moyenne en nombre de 2 000 à 100 000, un indice d'acide entre 25 et 300 et un indice d'OH entre 50 et 250 ;

   suivie par une réaction avec un réticulant du produit obtenu par la polymérisation.

2. Microparticules de polymère dispersées en phase aqueuse, dont l'extérieur est totalement réticulé, susceptibles d'être obtenues par polymérisation en phase aqueuse d'un mélange de monomères à base d'au moins un composé éthyléniquement monofonctionnel, en présence d'un polymère choisi parmi :

   - un polyesterpolyol présentant une masse moléculaire moyenne en nombre de 500 à 10 000, un indice d'acide entre 22 et 224 et un indice d'OH entre 60 et 400 ;
   - un polyuréthanne présentant une masse moléculaire moyenne en nombre de 500 à 20 000, un indice d'acide entre 25 et 150 et un indice d'OH entre 50 et 350, le polyuréthanne présentant en moyenne statistique par molécule au moins un groupe carboxyle libre issu d'un polyesterpolyol ; et/ou
   - un polyacrylate présentant une masse moléculaire moyenne en nombre de 2 000 à 100 000, un indice d'acide entre 25 et 300 et un indice d'OH entre 50 et 250 ;

   suivie par une réaction avec un réticulant du produit obtenu par la polymérisation.

3. Microparticules de polymère dispersées en phase aqueuse, dont l'extérieur est totalement réticulé, selon l'une quelconque des revendications précédentes, **caractérisées par le fait que** le polymère choisi parmi un polyesterpolyol, un polyuréthanne et/ou un polyacrylate présente en moyenne statistique au moins un groupe carboxyle libre par molécule, qui est issu de l'acide trimellitique ou de l'anhydride de l'acide trimellitique.

4. Microparticules de polymère dispersées en phase aqueuse, dont l'extérieur est totalement réticulé, selon l'une quelconque des revendications précédentes, **caractérisées par le fait que** le composé éthyléniquement monofonctionnel est choisi dans le groupe des esters alkyliques ou des esters hydroxyalkyliques de l'acide acrylique ou de l'acide méthacrylique.

5. Microparticules de polymère dispersées en phase aqueuse, dont l'extérieur est totalement réticulé, selon la revendication 4, **caractérisées par le fait que** le composé éthyléniquement monofonctionnel est l'acétate de vinyle, le vinyltoluène, le styrène, l'acrylamide ou un (méth)acrylate d'alkyle ou (méth)acrylate d'hydroxyalkyle présentant 1 à 18 atomes de carbone dans le reste alkyle.

6. Microparticules de polymère dispersées en phase aqueuse, dont l'extérieur est totalement réticulé, selon la revendication 5, **caractérisées par le fait que** le (méth)acrylate d'alkyle est choisi dans le groupe constitué par l'acrylate de lauryle, le (méth)acrylate d'isobornyle, le (méth)acrylate de cyclohexyle, le (méth)acrylate de tert.-butylcyclohexyle, le (méth)acrylate de benzyle, le (méth)acrylate de glycidyle et le (méth)acrylate de triméthylcyclohexyle.

7. Microparticules de polymère dispersées en phase aqueuse, dont l'extérieur est totalement réticulé, selon la revendication 5, **caractérisées par le fait que** le (méth)acrylate d'alkyle est choisi dans le groupe constitué par le (méth)acrylate d'$\alpha$-éthylhexyle, le (méth)acrylate de méthyle, le (méth)acrylate de n-butyle et le (méth)acrylate de tert.-butyle.

8. Microparticules de polymère dispersées en phase aqueuse, dont l'extérieur est totalement réticulé, selon la revendication 5, **caractérisées par le fait que** le (méth)acrylate d'hydroxyalkyle est choisi dans le groupe constitué par le (méth)acrylate de 2-hydroxyéthyle, le (méth)acrylate de 2-hydroxypropyle, le (méth)acrylate de 2-hydroxybutyle, le mono-(méth)acrylate d'hexanediol-1,6 et le (méth)acrylate de 4-hydroxybutyle.

9. Microparticules de polymère dispersées en phase aqueuse, dont l'extérieur est totalement réticulé, selon l'une quelconque des revendications précédentes, **caractérisées par le fait que** le composé éthyléniquement di- ou multifonctionnel est choisi dans le groupe constitué par les diacrylates, triacrylates et/ou esters de l'acide (méth) acrylique et d'alcools polyfonctionnels.

10. Microparticules de polymère dispersées en phase aqueuse, dont l'extérieur est totalement réticulé, selon la revendication 9, **caractérisées par le fait que** le composé éthyléniquement di- ou multifonctionnel est le (méth) acrylate d'allyle, le di(méth)acrylate d'hexanediol, le di(méth)acrylate d'éthylèneglycol, le di(méth)acrylate de néopentylglycol, le di(méth)acrylate de butanediol ou le tri(méth)acrylate de triméthylolpropane.

11. Microparticules de polymère dispersées en phase aqueuse, dont l'extérieur est totalement réticulé, selon l'une des quelconques des revendications précédentes, **caractérisées par le fait que** le composé éthyléniquement monofonctionnel est en partie un polyester ou un polyuréthanne présentant un acide d'acide de moins de 5, en particulier de moins de 3, qui en moyenne statistique contient jusqu'à une double liaison polymérisable par molécule.

12. Microparticules de polymère dispersées en phase aqueuse, dont l'extérieur est totalement réticulé, selon l'une quelconque des revendications précédentes, **caractérisées par le fait que** le composé éthyléniquement di- ou multifonctionnel est en partie un polyester ou un polyuréthanne présentant un indice d'acide de moins de 5, en particulier de moins de 3, qui contient en moyenne statistique au moins 1,5 double liaison polymérisable par molécule.

13. Microparticules de polymère dispersées en phase aqueuse, dont l'extérieur est totalement réticulé, selon l'une quelconque des revendications précédentes, **caractérisées par le fait que**

- le polyesterpolyol utilisé pendant la polymérisation présente une masse moléculaire moyenne en nombre entre 700 et 5 000, de façon particulièrement préférée entre 750 et 2 000 ; un indice d'acide entre 35 et 150, de façon particulièrement préférée entre 40 et 120 ; et un indice d'OH entre 150 et 300, de façon particulièrement préférée entre 220 et 280 ;
- le polyuréthanne utilisé pendant la polymérisation présente une masse moléculaire moyenne en nombre entre 700 et 5 000, de façon particulièrement préférée entre 750 et 2 500 ; un indice d'acide entre 30 et 120, de façon particulièrement préférée entre 40 et 80 ; et un indice d'OH entre 150 et 300, de façon particulièrement préférée entre 220 et 280 ; et/ou

- le polyacrylate utilisé pendant la polymérisation présente une masse moléculaire moyenne en nombre entre 2 500 et 20 000, de façon particulièrement préférée entre 4 000 et 10 000 ; un indice d'acide entre 35 et 150, de particulièrement préférée entre 40 et 125 ; et un indice d'OH entre 100 et 250, de façon particulièrement préférée entre 150 et 200.

**14.** Microparticules de polymère dispersées en phase aqueuse, dont l'extérieur est totalement réticulé, selon l'une des revendications précédentes, **caractérisées par le fait que** le polyester polyol utilisé pendant la polymérisation ne présente pas de double liaison polymérisable et est susceptible d'être obtenu par la réaction d'au moins un acide polycarboxylique sans double liaison polymérisable avec au moins un polyol sans double liaison polymérisable.

**15.** Microparticules de polymère dispersées en phase aqueuse, dont l'extérieur est totalement réticulé, selon l'une quelconque des revendications 1 à 13, **caractérisées par le fait que** le polyesterpolyol présente en moyenne statistique au moins une double liaison polymérisable par molécule et est susceptible d'être obtenu par la réaction de :

(i) au moins un acide polycarboxylique sans double liaison polymérisable avec au moins un polyol présentant au moins une double liaison polymérisable ;
(ii) au moins un acide polycarboxylique présentant au moins une double liaison polymérisable avec au moins un polyol sans double liaison polymérisable ;
(iii) au moins un acide polycarboxylique présentant au moins une double liaison polymérisable avec au moins un polyol présentant au moins une double liaison polymérisable.

**16.** Microparticules de polymère dispersées en phase aqueuse, dont l'extérieur est totalement réticulé, selon l'une des revendications 14 ou 15, **caractérisées par le fait que** l'acide polycarboxylique sans double liaison polymérisable est choisi dans le groupe constitué par :

- l'acide succinique, l'acide glutarique, l'acide adipique, l'acide azélaïque, l'acide téréphtalique, l'acide phtalique, l'acide isophtalique, l'acide endométhylènetétrahydrophtalique, l'acide 1,2-cyclohexanedicarboxylique, l'acide 1,3-cyclohexanedicarboxylique, l'acide 1,4-cyclohexanedicarboxylique, le dodécane diacide, l'acide dodécanedicarboxylique ;
- les acides gras dimères et polymères ainsi que l'acide trimellitique ;

ainsi que les anhydrides possibles de ceux-ci.

**17.** Microparticules de polymère dispersées en phase aqueuse, dont l'extérieur est totalement réticulé, selon l'une des revendications 14 à 16, **caractérisées par le fait que** le polyol sans double liaison polymérisable est choisi dans le groupe constitué par :

- l'éthylèneglycol, le diéthylèneglycol, le triéthylèneglycol, le tétraéthylèneglycol, l'hexaéthylèneglycol, le 1,2-propylèneglycol, le 1,3-propylèneglycol, le 1,4-butanediol, le 1,5-pentanediol, le 1,6-hexanediol, le 2,2-diméthylpropanediol, le 2,2,4-triméthylpentanediol, le 1,3-diméthylolcyclohexane, le 1,4-diméthylolcyclohexane, le monoester de l'acide hydroxypivalique et du néopentylglycol, l'acide diméthylolpropionique et le bisphénol A perhydrogéné ;
- le triméthylolpropane et le glycérol ; ainsi que
- le pentaérythritol, le dipentaérythritol et le di-(triméthylolpropane).

**18.** Microparticules de polymère dispersées en phase aqueuse, dont l'extérieur est totalement réticulé, selon l'une quelconque des revendications 15 à 17, **caractérisées par le fait que** l'acide polycarboxylique présentant au moins une double liaison polymérisable est choisi dans le groupe constitué par l'acide maléique, l'acide fumarique, l'acide itaconique, l'acide citraconique et l'acide aconitique ainsi que les anhydrides possibles de ceux-ci.

**19.** Microparticules de polymère dispersées en phase aqueuse, dont l'extérieur est totalement réticulé, selon l'une quelconque des revendications 15 à 18, **caractérisées par le fait que** le polyol présentant au moins une double liaison polymérisable est choisi dans le groupe constitué par :

- le 1,4-butanediol, l'ester allylique de l'acide diméthylolpropionique, l'ester vinylique de l'acide diméthylolpropionique, l'éther monoallylique du triméthylolpropane, l'éther monoallylique du glycérol ;
- les produits d'addition de l'allyl glycidyl éther ou du (méth)acrylate de glycidyle sur un polyester présentant un groupe carboxyle ; ainsi que

- les produits d'addition de l'allyl glycidyl éther ou du (méth)acrylate de glycidyle sur l'acide diméthylolpropionique.

**20.** Microparticules de polymère dispersées en phase aqueuse, dont l'extérieur est totalement réticulé, selon l'une quelconque des revendications 13 à 19, **caractérisées par le fait que** le polyesterpolyol est modifié par au moins un acide monocarboxylique, choisi dans le groupe constitué par les acides gras saturés ou insaturés, isolés ou conjugués, linéaires ou ramifiés, ainsi que l'acide benzoique ou l'acide crotonique.

**21.** Microparticules de polymère dispersées en phase aqueuse, dont l'extérieur est totalement réticulé, selon la revendication 20, **caractérisées par le fait que** l'acide gras présente 5 à 22 atomes de carbone, et en particulier l'acide linoléique, l'acide oléique, l'acide gras de soja, l'acide isononanoïque ou l'acide isostéarique.

**22.** Microparticules de polymère dispersées en phase aqueuse, dont l'extérieur est totalement réticulé, selon l'une quelconque des revendications précédentes, **caractérisées par le fait que** le réticulant est une résine aminoplaste ou un polyisocyanate.

**23.** Microparticules de polymère dispersées en phase aqueuse, dont l'extérieur est totalement réticulé, selon la revendication 22, **caractérisées par le fait que** la résine aminoplaste est une résine de mélanine.

**24.** Microparticules de polymère dispersées en phase aqueuse, dont l'extérieur est totalement réticulé, selon la revendication 22, **caractérisées par le fait que** le polyisocyanate est choisi dans le groupe constitué par le 1,3-bis (1-isocyanato-1-méthyléthyl)benzène (TMXDI, m-tétraméthylxylylène diisocyanate), le (4,4'-dicyclohexylméthane diisocyanate, Desmodur W), l'isophorone diisocyanate (IPDI, 3,5,5-triméthyl-1-isocyanato-3-isocyanatométhylcyclohexane) et la 2,4,6-trioxo-1,3,5-tris(6-isocyanatohexyl)hexahydro-1,3,5-triazine (Desmodur N3300) .

**25.** Microparticules de polymère dispersées en phase aqueuse, dont l'extérieur est totalement réticulé, selon l'une des revendications 22 ou 24, **caractérisées par le fait que** le polyisocyanate est modifié hydrophile.

**26.** Microparticules de polymère dispersées en phase aqueuse, dont l'extérieur est totalement réticulé, selon l'une quelconque des revendications précédentes,
**caractérisées par le fait que** le degré de neutralisation du polyesterpolyol pendant tout le procédé de fabrication se situe entre 30 et 100 %, en particulier entre 50 et 80 %.

**27.** Microparticules de polymère dispersées en phase aqueuse, dont l'extérieur est totalement réticulé, selon l'une quelconque des revendications précédentes, **caractérisées par le fait que** la polymérisation est conduite en tant que polymérisation en émulsion avec utilisation d'un dispositif de dispersion à jet d'air ou d'un dispositif d'émulsification à jet d'eau.

**28.** Microparticules de polymère dispersées en phase aqueuse, dont l'extérieur est totalement réticulé, selon l'une quelconque des revendications précédentes, **caractérisées par le fait que** la polymérisation est conduite en tant que polymérisation redox avec utilisation de l'acide ascorbique, du sulfate de fer II et d'au moins un hydroperoxyde.

**29.** Microparticules de polymère dispersées en phase aqueuse, dont l'extérieur est totalement réticulé, selon l'une quelconque des revendications précédentes, **caractérisées par le fait qu'**il est transformé en une forme anhydre.

**30.** Utilisation de microparticules de polymère dispersées en phase aqueuse, telles que définies à l'une quelconque des revendications précédentes, pour des compositions de revêtement aqueuses ou à teneur en solvant.

**31.** Utilisation selon la revendication 30 pour des laques de base, des laques de base à effet ou des laques transparentes, aqueuses ou à teneur en solvant, dans l'industrie automobile.

**32.** Utilisation selon l'une des revendications 30 ou 31 pour des préparations pigmentaires aqueuses ou à teneur en solvant.